(19) Europäisches Patentamt / European Patent Office / Office européen des brevets

(11) **EP 4 478 637 A1**

(12) **EUROPEAN PATENT APPLICATION**
published in accordance with Art. 153(4) EPC

(43) Date of publication:
**18.12.2024   Bulletin 2024/51**

(21) Application number: **23753200.7**

(22) Date of filing: **10.02.2023**

(51) International Patent Classification (IPC):
**H04L 1/18** (2023.01)    **H04L 5/00** (2006.01)
**H04W 4/06** (2009.01)

(52) Cooperative Patent Classification (CPC):
**H04L 1/18; H04L 5/00; H04W 4/06**

(86) International application number:
**PCT/KR2023/001969**

(87) International publication number:
**WO 2023/153854 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **11.02.2022   KR 20220018309**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR UPLINK TRANSMISSION AND RECEPTION IN WIRELESS COMMUNICATION SYSTEM**

(57)    Disclosed are a method and device for uplink transmission and reception in a wireless communication system. A method by which a terminal performs uplink transmission, according to one embodiment of the present disclosure, comprises the steps of: receiving, from a base station, configuration information related to a semi-static HARQ-ACK codebook for a PDSCH; receiving, from the base station, at least one DCI including a DAI field; and transmitting, to the base station, HARQ-ACK information for a first PDSCH on the basis of only the first PDSCH satisfying a specific condition among a plurality of PDSCHs being received from the base station, wherein, on the basis of the DAI field, included in the at least one DCI associated with the plurality of PDSCHs, indicating a specific value, the semi-static HARQ-ACK codebook including the HARQ-ACK information for each of the plurality of PDSCHs may be transmitted to the base station.

FIG.10

```
TRANSMITTING CONFIGURATION INFORMATION
RELATED TO THE SEMI-STATIC HARQ-ACK
CODEBOOK FOR THE PDSCH TO THE BASE         ~S1010
STATION
          |
RECEIVING AT LEAST ONE DCI INCLUDING A
DAI FIELD FROM THE BASE STATION            ~S1020
          |
BASED ON A FIRST PDSCH THAT SATISFIES A
SPECIFIC CONDITION AMONG A PLURALITY OF
PDSCHS BEING RECEIVED FROM THE BASE
STATION, TRANSMITTING HARQ-ACK            ~S1030
INFORMATION FOR THE FIRST PDSCH TO THE
BASE STATION
```

**Description**

[TECHNICAL FIELD]

The present disclosure relates to a wireless communication system, and more specifically to a method and device for performing uplink transmission and reception in a wireless communication system.

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

Additionally, an additional technical problem of the present disclosure is to provide a method and device for performing a fall-back operation when simultaneously transmitting and receiving unicast and/or multicast PDSCH.

The technical problems to be achieved by the present disclosure are not limited to the above-described technical objects, and other technical problems which are not described herein will be clearly understood by those skilled in the pertinent art from the following description.

[Technical Solution]

According to one embodiment of the present disclosure, a method for a user equipment (UE) to perform uplink transmission in a wireless communication system may include receiving, from a base station, configuration information related to a semi-static hybrid automatic repeat request (HARQ)-acknowledgement (ACK) codebook for a physical downlink shared channel (PDSCH); receiving, from the base station, at least one downlink control information (DCI) including a downlink assignment index (DAI) field; and based on a first PDSCH satisfying a specific condition among a plurality of PDSCHs being received from the base station, transmitting HARQ-ACK information for the first PDSCH to the base station, and based on the DAI field included in the at least one DCI associated with the plurality of PDSCHs indicating a specific value, the semi-static HARQ-ACK codebook constructed based on HARQ-ACK information for each of the plurality of PDSCHs may be transmitted to the base station.

According to another embodiment of the present disclosure, A method of performing uplink reception by a base station in a wireless communication system may include transmitting, to a user equipment (UE), configuration information related to a semi-static hybrid automatic repeat request (HARQ)-acknowledgement (ACK) codebook for a physical downlink shared channel (PDSCH); transmitting, to the UE, at least one downlink control information (DCI) including a downlink assignment index (DAI) field; and based on a first PDSCH satisfying a specific condition among a plurality of PDSCHs being received from the base station, receiving HARQ-ACK information for the first PDSCH from the UE, and based on the DAI field included in the at least one DCI associated with the plurality of PDSCHs indicating a specific value, the semi-static HARQ-ACK codebook constructed based on HARQ-ACK information for each of the plurality of PDSCHs may be received from the UE.

[Technical Effects]

According to an embodiment of the present disclosure, a method and device for performing communication in a wireless communication system may be provided.

Additionally, according to an embodiment of the present disclosure, a method and device for performing a fall-back operation when simultaneously transmitting and receiving unicast and/or multicast PDSCH may be provided.

Effects achievable by the present disclosure are not limited to the above-described effects, and other effects which are not described herein may be clearly understood by those skilled in the pertinent art from the following description.

[BRIEF DESCRIPTION OF THE DRAWINGS]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating transmission timing of unicast/multicast HARQ-ACK to which the present disclosure can be applied.

FIG. 8 is a diagram illustrating an FDM unicast/multicast transmission/reception method for the same G-RNTI to which the present disclosure may be applied.

FIG. 9 is a diagram illustrating an FDM unicast/multicast transmission/reception method for two G-RNTIs to which the present disclosure may be applied.

FIG. 10 is a diagram for describing an uplink transmission operation of a terminal in a wireless communication system to which the present disclosure may be applied.

FIG. 11 is a diagram for explaining an uplink reception operation of a base station in a wireless communication system to which the present disclosure may be applied.

FIG. 12 is a diagram for describing the signaling procedure of the network side and the terminal according to an embodiment of the present disclosure.

FIG. 13 illustrates a block diagram of a wireless communication device according to an embodiment of the present disclosure.

[DETAILED DESCRIPTION]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A (Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212(multiplexing and channel coding), TS 36.213 (physical layer procedures), TS 36.300 (overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform

- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

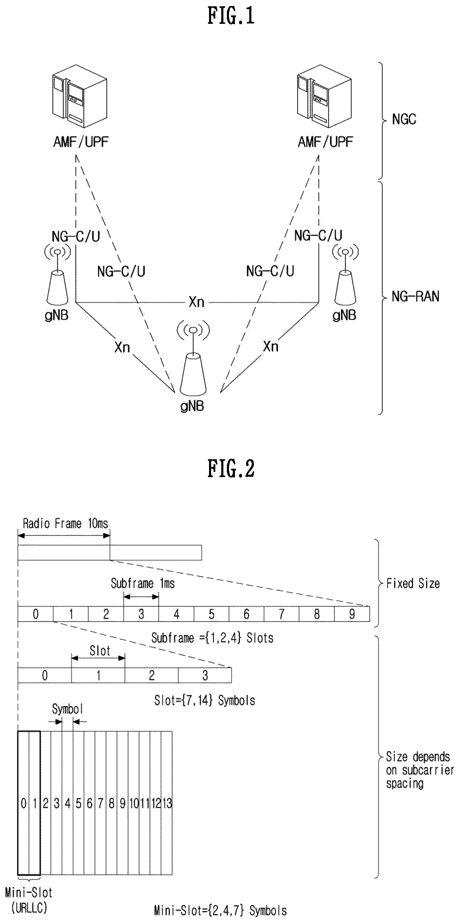

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC (New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot Nf)$. Here, $\Delta f_{max}$ is $480\cdot10^3$ Hz and $N_f$ is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0, ..., N_{slot}^{subframe,\mu}-1\}$ in a subframe and are numbered in an increasing order of $n_{s,f}^{\mu}\in\{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe, \mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

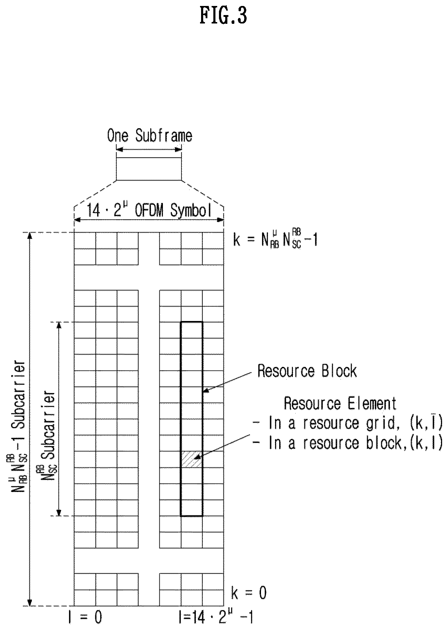

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l').

Here, k=0,...,$N_{RB}^{\mu}N_{sc}^{RB}$-1 is an index in a frequency domain and l'=0, ...,$2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

- absoluteFrequencyPointA represents a frequency-position of point A expressed as in ARFCN (absolute radiofrequency channel number). Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

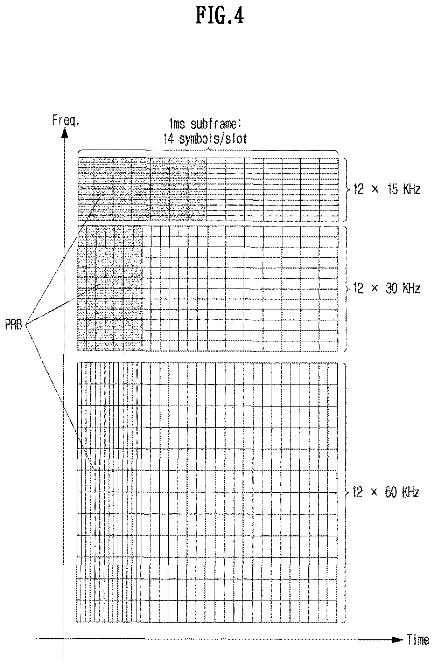

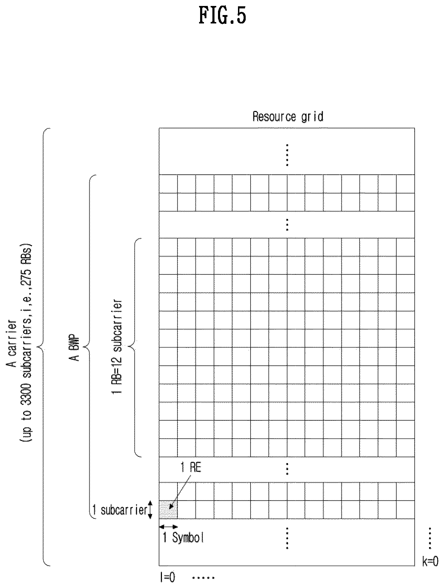

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

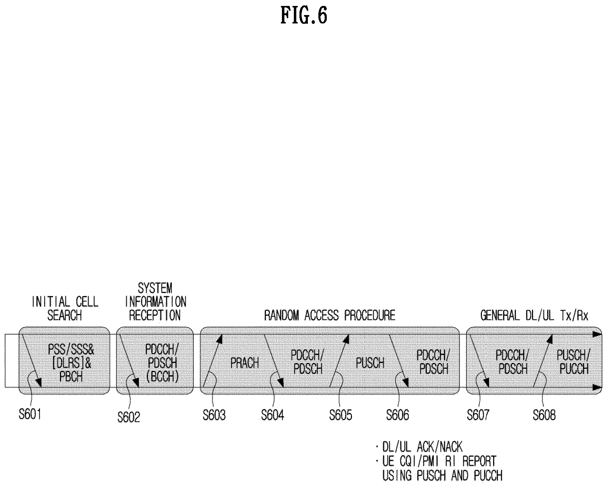

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

MBMS(multimedia broadcast/multicast service) Scheme

MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

Here, SFN scheme may be used to provide a broadcast service to a wide area (e.g., MBMS area) through resources allocated semi-statically in advance, and SC-PTM scheme may be mainly used to provide a broadcast service only within a cell coverage through dynamic resources.

SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting SC-MCCH or SC-MTCH data may be scheduled through a PDCCH indicated by a Group Radio Network Temporary Identifier (G-RNTI).

In this case, a temporary mobile group identify (TMGI) corresponding to the service ID may be mapped one-to-one with a specific G(group)-RNTI value. Accordingly, when the base station provides a plurality of services, a plurality of G-RNTI values may be allocated for SC-PTM transmission. One or a plurality of terminals may perform PDCCH monitoring by using a specific G-RNTI to receive a specific service.

And, for a specific service/specific G-RNTI, SC-PTM dedicated DRX on-duration period may be configured, and in this case, the UEs may wake up only for a specific on-duration period and perform PDCCH monitoring for the G-RNTI.

MBS (multicast broadcast service) based transmission / reception operation

In a basic wireless communication system, the base station sets UE-specific SPS(semi-persistent scheduling) configuration information to a specific terminal, so that a downlink (DL) SPS transmission resource that is repeated according to a configured period may be allocated to a specific terminal. In this case, the DCI transmitted through the UE-dedicated PDCCH indicates activation of a specific SPS configuration index (SPS activation), thereby indicating the corresponding terminal to repeatedly receive the SPS transmission resource according to a configured period.

This initial SPS transmission resource may be used for initial HARQ transmission, and the base station may allocate a retransmission resource of a specific SPS configuration index through DCI transmitted through a UE-dedicated PDCCH. For example, when the terminal reports a HARQ negative acknowledgment (NACK) for the SPS transmission resource, the base station may allocate the retransmission resource to DCI so that the terminal may receive the DL retransmission.

The DCI transmitted through the UE-dedicated PDCCH may indicate deactivation (SPS release or SPS deactivation) of a specific SPS configuration index, and in this case, the corresponding UE may not receive the indicated SPS transmission resource. Here, the CRC of the DCI for the activation/retransmission/deactivation may be scrambled with a CS-RNTI (Configured Scheduling RNTI).

In a wireless communication system (e.g., NR), a DL broadcast or DL multicast transmission scheme for supporting an MBS similar to the above-described MBMS may be applied. The base station may provide a point-to-multipoint (PTM) transmission scheme and a point-to-point (PTP) transmission scheme for DL broadcast or DL multicast transmission.

In the PTM transmission scheme for MBS, the base station may transmit a group common PDCCH and a group common PDSCH to a plurality of terminals, and a plurality of UEs may simultaneously receive the same group common PDCCH and group common PDSCH transmission and decode the same MBS data.

In addition, in the PTP transmission scheme for MBS, the base station may transmit the UE-dedicated PDCCH and the UE-dedicated PDSCH to a specific UE, and only the corresponding UE may receive the UE-dedicated PDCCH and the UE-dedicated PDSCH. Here, when there are a plurality of UEs receiving the same MBS service, the base station may separately transmit the same MBS data to individual UEs through different UE-dedicated PDCCHs and UE-dedicated PDSCHs.

In the PTM transmission method, the base station may transmit a plurality of group common PDSCHs to UEs. Here, the base station may receive the UE's HARQ-ACK for the group common PDSCH through the UE-dedicated PUCCH resource.

Here, if the TB (Transport Block) for the group common PDSCH is successfully decoded, the UE may transmit ACK with HARQ-ACK information. If the TB for the unicast PDSCH is not successfully decoded, the UE may transmit NACK as HARQ-ACK information. This HARQ-ACK transmission method can be referred to as ACK/NACK-based HARQ-ACK. The UE may transmit ACK/NACK-based HARQ-ACK using UE-dedicated PUCCH resources.

As another example, assume that a NACK-only based HARQ-ACK method is set for a group common PDSCH. The UE may not perform PUCCH transmission in a situation where ACK must be transmitted. And, the UE may perform PUCCH transmission only in situations where NACK must be transmitted. Here, the UE may transmit HARQ-ACK information including NACK through PUCCH using group common PUCCH resources.

In a basic wireless communication system, a UE may receive unicast traffic through a terminal-specific unicast PDSCH and receive multicast traffic such as MBS through a group common multicast PDSCH. In this case, the UE may transmit unicast HARQ-ACK for the unicast PDSCH and multicast HARQ-ACK for the multicast PDSCH.

Here, when configuring a type 2-based codebook for multicast HARQ-ACK and enabling or disabling HARQ-ACK based on DCI, it is not clear how to configure the type 2 codebook according to the downlink assignment index (DAI) included in the group common DCI. Additionally, when the total DAI is indicated by UL DCI, it is not clear how to transmit/configure multicast HARQ-ACK.

Also, Type-1 HARQ-AC has the disadvantage of having a large PUCCH overhead. Therefore, the following fall-back operation may be applied for cases where PDSCH scheduling resources are small.

Assume that the UE reports, within the $M_{A,c}$ occasion for receiving the determined candidate PDSCH, HARQ-ACK information on PUCCH only for a release of the SPS PDSCH indicated by DCI format 1_0 with a counter DAI field value of 1 in the PCell, receiving a PDSCH scheduled by DCI format 1_0 with a counter DAI field value of 1 on the PCell, or SPS PDSCH reception.

Here, the UE may determine a HARQ-ACK codebook for SPS PDSCH release only, a HARQ-ACK codebook for PDSCH reception only, or a HARQ-ACK codebook for SPS PDSCH reception only, depending on the occasion(s) in each serving cell(s). Here, the counter DAI value of DCI format 1_0 may follow Table 6.

[Table 6]

| DAI MSB, LSB | $V_{C-DAI}^{DL}$ or $V_{T-DAI}^{DL}$ | Number of {serving cell, PDCCH monitoring occasion}-pair(s) in which PDSCH transmission(s) associated with PDCCH or PDCCH indicating SPS PDSCH release or DCI format 1_1 indicating SCell dormancy is present, denoted as Y and Y $\geq$ 1 |
|---|---|---|
| 0, 0 | 1 | $(Y-1)\mathrm{mod}T_D + 1 = 1$ |
| 0, 1 | 2 | $(Y-1)\mathrm{mod}T_D + 1 = 2$ |
| 1, 0 | 3 | $(Y-1)\mathrm{mod}T_D + 1 = 3$ |
| 1, 1 | 4 | $(Y-1)\mathrm{mod}T_D + 1 = 4$ |

Otherwise, the fall-back operation is not applied and the general HARQ-ACK codebook determination method may be applied. As described above, in order for the UE to perform fall-back based HARQ-ACK transmission, the base station may intentionally indicate that the counter DAI field value is 1 for HARQ-ACK transmission in which the Type-1 codebook is configured.

Here, in a basic wireless communication system, when the UE transmits HARQ-ACK for a unicast PDSCH, fall-back operation is supported, but there is a problem that fall-back operation is not supported when transmitting HARQ-ACK for multicast PDSCH.

Transmission and reception operations based on the common frequency resource (CFR) set for the UE

One DL CFR (for MBS) may include group common PDCCH and group common PDSCH transmission resources for MBS transmission and reception. One UL CFR may include HARQ-ACK PUCCH resources for group common PDSCH reception. One CFR may be one MBS-specific BWP or one UE-specific BWP. Additionally or alternatively, one or multiple CFRs may be established within one UE-specific BWP. One CFR is associated with one UE-specific BWP.

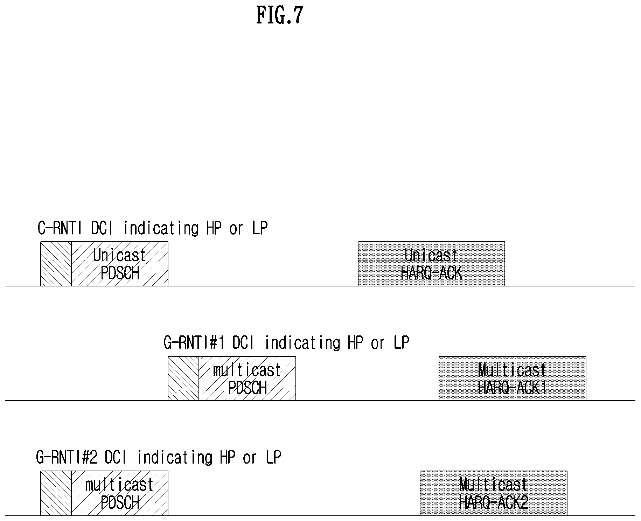

FIG. 7 is a diagram for describing unicast HARQ-ACK and multicast HARQ-ACK transmission timing for unicast PDCCH/PDSCH and multicast PDCCH/PDSCH transmitted in FDM or TDM.

As shown in FIG. 7, the UE may receive group common PDCCH/PDSCHs scheduled with different G-RNTIs (i.e., UE group identifiers receiving MBS) through FDM or TDM. The base station may configure CFR, a frequency range similar to BWP, and the UE may receive group common PDCCH/PDSCH through CFR.

A UE in connected mode may receive unicast PDCCH/PDSCH by activating one DL BWP, and may receive group common PDCCH/PDSCH through a CFR connected to the activated DL BWP.

Since the CFR and its associated DL BWP overlap each other, and the CFR of the serving cell is included within the active DL BWP of the serving cell, the UE may receive both unicast PDSCH and multicast PDSCH transmitted through FDM or TDM.

If the UE supports carrier aggregation (CA), the UE may receive both unicast PDSCH and multicast PDSCH from a plurality of serving cells.

Here, the unicast PDSCH occasion may be transmitted in TDM with the multicast PDSCH occasion for G-RNTI #1, and may be transmitted in FDM with the multicast PDSCH occasion for G-RNTI #2.

A unicast PDSCH and a specific multicast PDSCH may be transmitted through the same or different serving cells, and multiple multicast PDSCHs may be transmitted through the same or different serving cells or the same or different CFRs.

The base station may configure whether the unicast PDSCH and multicast PDSCH are transmitted based on FDM or whether the unicast PDSCH and multicast PDSCH are transmitted based on TDM (for each G-RNTI, by CFR, by DL BWP, by serving cell, or by cell group).

The base station may configure 'PUCCH-config' for each BWP or CFR, and configure k1 (e.g., the number of slots from the slot where the PDSCH is scheduled to the PUCCH where the ACK for it will be transmitted) through one 'PUCCH-config'. Additionally, the base station may configure 'PDSCH-config' for each BWP or CFR, and configure start and length indicator value (SLIV) through one 'PDSCH-config'. SLIV is an indication field for the start symbol index and number of symbols within the slot of the PDSCH and/or PUSCH, and can be carried on the PDCCH scheduling the corresponding PDSCH and/or PUSCH.

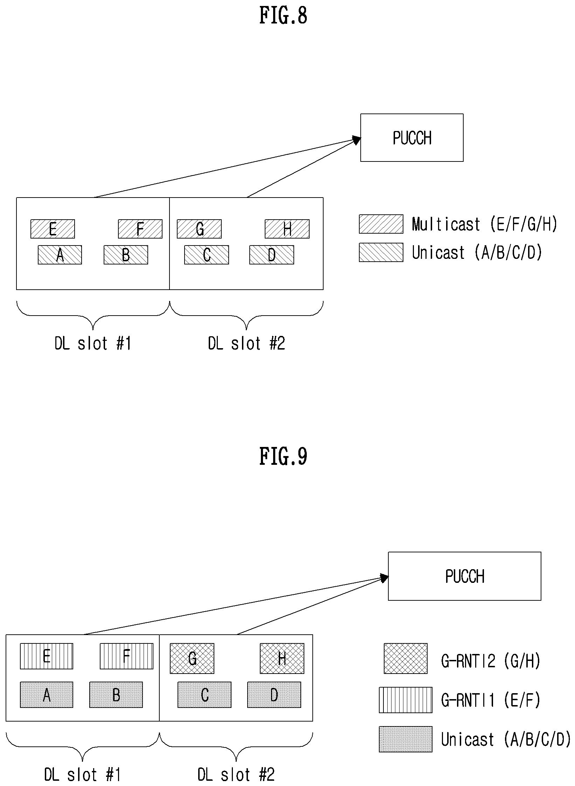

In a basic wireless communication system as shown in FIG. 8, the UE may configure a Type-1 codebook for FDM unicast and multicast with at least the following priorities to receive one G(group)-RNTI for multicast.

- To construct a Type-1 HARQ-ACK codebook for FDMed unicast and multicast with the same priority from the same TRP, the HARQ-ACK bit for all PDSCH occasions for all slots for all serving cells for unicast may precede the HARQ-ACK bit for all PDSCH occasions for all slots for all serving cells for multicast.
- When the UE reports capabilities supporting FDM unicast and multicast in the same slot, the UE may be semi-statically instructed to generate a Type-1 HARQ-ACK codebook using the FDM method. Otherwise, the UE may not expect unicast and multicast to be scheduled in the FDM method.

As shown in FIG. 8, the UE may perform the steps described below to configure a type-1 codebook for FDMed unicast transmission and multicast transmission for the same G-RNTI.

Step 1 - Generate sub-codebook #1 for unicast within every slot,

Step 2 - Create another sub-codebook #2 for multicast within every slot,

Step 3 - Append sub-codebook #2 to sub-codebook #1.

As a result, the order of the joint codebook may be (A, B, C, D, E, F, G, G).

The UE may be configured to receive FDMed unicast transmission and multicast transmission for multiple G-RNTIs for multicast as shown in FIG. 9.

As an example (Alternative 1) of the present disclosure, in the case of Type-1 codebook configuration for FDM unicast and multicast, if multiple G-RNTIs are configured for the UE and 'fdmed-Reception-Multicast' is configured, the HARQ-ACK sub-codebook for multicast may be configured to the sub-codebook for all G-RNTIs. A sub-codebook for each G-RNTI may be generated for each k1 and TDRA configuration for the G-RNTI.

The UE may perform the steps described below to configure a Type-1 codebook for FDM unicast transmission and multicast transmission for two G-RNTIs as shown in FIG. 9.

Step 1 - Generate sub codebook #1 for unicast within every slot,

Step 2 - Generate another sub-codebook #2 for multicast to all G-RNTIs within all slots;

Step 3 - Append sub-codebook #2 to sub-codebook #1,

As a result, the order of the joint codebook can be (A, B, C, D, E, F, G, H).

As another example of the present disclosure (Alternative 2), for Type-1 codebook configuration for FDM unicast and multicast, when multiple G-RNTIs are configured for a terminal and 'fdmed-Reception-Multicast' is configured, the HARQ-ACK sub-codebook for multicast may be constructed by appending the sub-codebook for each G-RNTI in ascending order of G-RNTI values.

A sub-codebook for each G-RNTI may be generated for each k1 and TDRA configuration for the G-RNTI. The maximum number of G-RNTI(s) configured in the UE for FDMed unicast and multicast Type-1 codebooks may be based on UE capabilities.

The UE may perform the steps described below to configure a type-1 codebook for FDMed unicast transmission and multicast transmission for the two G-RNTIs in FIG. 9.

Step 1 - Generate sub codebook #1 for unicast within every slot,

Step 2 - Generate another sub-codebook for multicast for each G-RNTI within every slot;

- Generate sub-codebook #2-1 for G-RNTI value 1
- Generate subcodebook #2-2 for G-RNTI value 2
- Add sub-codebook#2-2 to sub-codebook#2-1 based on ascending order of G-RNTI values.

Step 3 - Add sub codebook #2 to sub codebook #1

As a result, the order of the joint codebook may be (A, B, C, D, E, F, G, H).

As another example (Alternative 3) of this disclosure, the UE may determine the HARQ-ACK sub-codebook for multicast based on Alternative 2. However, if UCI cannot accommodate the HARQ-ACK sub-codebook for multicast based on Alternative 2, the UE may determine the HARQ-ACK sub-codebook for multicast based on Alternative 1.

Option 3A: If UCI cannot accommodate the HARQ-ACK sub-codebook for multicast generated based on Alternative 2, the UE may determine the HARQ-ACK sub-codebook for multicast based on Alternative 1. Otherwise, the UE may determine the HARQ-ACK sub-codebook for multicast based on Alternative 2.

Option 3B: If the number of G-RNTIs that the terminal wants to receive is greater than the threshold indicated by the base station, the UE may determine the HARQ-ACK sub-codebook for multicast based on alternative 1. Otherwise, the UE may determine the HARQ-ACK sub-codebook for multicast based on Alternative 2.

Option 3C: If the HARQ-ACK sub-codebook for multicast corresponds to a low priority of G-RNTI(s), the UE may determine the HARQ-ACK sub-codebook for multicast based on Alternative 1.

If the HARQ-ACK subcodebook for multicast corresponds to a high priority of G-RNTI(s), the UE may determine the HARQ-ACK subcodebook for multicast based on Alternative 2.

Alternatively, if the HARQ-ACK sub-codebook for multicast corresponds to a high priority of G-RNTI(s), the UE may determine the HARQ-ACK sub-codebook for multicast based on Alternative 1.

If the HARQ-ACK subcodebook for multicast corresponds to a low priority of G-RNTI(s), the UE may determine the HARQ-ACK subcodebook for multicast based on Alternative 2.

Option 3D: For M-TRP, if the HARQ-ACK sub-codebook for multicast corresponds to the first TRP, the UE may determine the HARQ-ACK sub-codebook for multicast based on Alternative 1.

If the HARQ-ACK sub-codebook for multicast corresponds to the second TRP, the UE may determine the HARQ-ACK sub-codebook for multicast based on Alternative 2.

Option 3E: For CA or dual connectivity, if the HARQ-ACK subcodebook for multicast corresponds to the first serving cell or the first serving cell group, the UE may determine the HARQ-ACK subcodebook for multicast based on Alternative 1.

If the HARQ-ACK sub-codebook for multicast corresponds to the second serving cell or the second serving cell group, the UE may determine the HARQ-ACK sub-codebook for multicast based on Alternative 2.

The first serving cell group may be a secondary cell group and the second serving cell group may be a primary cell group, or vice versa. The first serving cell may be a SCell and the second serving cell may be a PCell (or PSCell), or vice versa. The first serving cell may be a scheduling cell and the second serving cell may be a scheduling cell, or vice versa.

Apart from SPS configurations for unicast, CFR configurations may include group common SPS configurations. Here, the group common SPS may include a multicast SPS for connected UEs or a broadcast SPS for idle/inactive/-connected UEs.

It is assumed that information for configuring a plurality of group common SPSs (i.e., group common SPS) is received, or information for configuring a group common SPS and a UE-only SPS (i.e., group common SPS configurations and UE-only SPS) is received. Here, the UE receiving the DCI of the CS-RNTI for PTP retransmission of the SPS may distinguish different SPS configurations using the HARQ Process ID included in the DCI.

As an example, when a DCI whose CRC is scrambled is received through CS-RNTI, and the HPN value of the received DCI corresponds to a specific SPS configuration index or group common SPS configuration, the UE may determine /determine that the PDSCH scheduled by DCI retransmits the TB of the SPS PDSCH corresponding to a specific SPS configuration index or group common SPS configuration.

When distinguishing SPS configurations index or group common SPS configurations based on HPN (i.e., HARQ Process ID), the base station may configure different 'nrofHARQ-Processes' (i.e., number of set HARQ processes) and 'harq-ProcID-Offset' (i.e. offset used to derive HARQ Process ID) for different SPS configurations or for UE-only SPS and group common SPS configurations.

That is, 'nrofHARQ-Processes' and 'harq-ProcID-Offset' are configurd for each SPS configuration index, and the UE may determine the HARQ Process ID for a specific SPS transmission according to Equation 3 below.

HARQ Process ID = [floor (CURRENT_slot $\times$ 10 / (numberOfSlotsPerFrame $\times$ periodicity))] modulo nrofHARQ-Processes + harq-ProcID-Offset　　　　[Equation 3]

Additionally or alternatively, when multiple group common SPS configurations are configured, or group common SPS configurations and UE-specific SPS configurations are configured together, group common CS-RNTI and unicast CS-RNTI may be configured separately. Here, the group common SPS and unicast SPS may share the same HARQ process ID. That is, the group common SPS and unicast SPS may overlap with the same HARQ process ID.

Additionally or alternatively, by configuring the same CS-RNTI for group common SPS configurations and UE-only SPS configurations and including a new indicator in the DCI of the CS-RNTI, the corresponding transmission may be distinguished as PTP retransmission or unicast transmission. Here, the new indicator of DCI may consist of 1 bit, but is not limited thereto. And, the new indicator of DCI may indicate a group common SPS configuration index.

Additionally or alternatively, the same CS-RNTI is configured for the group common SPS configuration and the UE-specific SPS configuration, and group common SPS transmission and UE-specific SPS transmission may be distinguished by the HARQ process ID included in the DCI of the CS-RNTI. In this case, the group common SPS and unicast SPS may be used by dividing the HARQ process (number).

According to the above-described methods, the UE may receive SPS as follows.

After a specific group common SPS is activated with a DCI whose CRC is scrambled with a specific G-CS-RNTI, the UE may decode the TB received through the group common SPS PDSCH by storing it in the HARQ process corresponding to a specific HPN value. The specific HPN value is the same as the HARQ Process ID corresponding to the group common SPS PDSCH resource.

Thereafter, the UE may receive a DCI with a CRC scrambled from the base station through a UE-specific CS-RNTI or C-RNTI, or receive a DCI with a CRC scrambled through a specific G-CS-RNTI.

If the received DCI indicates a retransmission resource and a specific HPN value, the UE may recognize the retransmission resource as a retransmission resource for the HARQ process corresponding to the indicated HPN value. Accordingly, the UE may re-decode the TB received through the corresponding retransmission resource by storing the HARQ process corresponding to the indicated HPN value.

Here, the DCI for the UE-specific CS-RNTI or C-RNTI may allocate PTP retransmission resources for the group common SPS, and the DCI for a specific G-CS-RNTI may be used to allocate PTM retransmission resources for the group common SPS. In this way, the specific G-CS-RNTI and the UE-specific CS-RNTI may have a relationship such as an option described later. Relationships such as options described later may be configured by the base station for the UE or may be defined in advance.

Option 1: Depending on the configurations of the base station, a specific G-CS-RNTI may be mapped to a specific UE-specific CS-RNTI.

Option 2: The UE's UE-specific CS-RNTI may be mapped to all G-CS-RNTIs for group common SPSs.

Option 3: If there is an SPS configuration index indicated by a specific terminal-specific CS-RNTI DCI, the G-CS-RNTI linked to the SPS configuration index may be mapped with a specific UE-specific CS-RNTI.

As described above, if the DCI whose CRC is scrambled by C-RNTI indicates a specific HPN in use by the group common SPS of the G-CS-RNTI, the UE may determine that the DCI is scheduling a unicast PDSCH, and allow the TB received from the unicast PDSCH to replace the TB stored in the HARQ process for the specific HPN.

Additionally or alternatively, the UE may determine that the DCI schedules retransmission of the group common SPS PDSCH, and accumulate the TB received from the retransmitted PDSCH in the TB stored in the HARQ process for the specific HPN and decode the corresponding TB.

An example of a UE-specific PDCCH activation command method for activating a group common SPS is as follows.

The unicast SPS and the group common SPS use the same CS-RNTI, and the DCI for activating the SPS can indicate the group common SPS with 1 bit information. Here, the HPN of the activated DCI may be unrelated to the SPS HARQ Process ID to be actually used.

In this case, the same SPS configuration index can be set and used for both the group common SPS and the unicast SPS. That is, the UE may simultaneously activate the group common SPS and unicast SPS with the same SPS configuration index.

Additionally or alternatively, the activation DCI indicates that group common SPS and unicast SPS with the same SPS configuration index are activated simultaneously, or the 1 bit may indicate that only the group common SPS or unicast SPS is activated.

Additionally or alternatively, unicast SPS and group common SPS may use the same CS-RNTI, and DCI for SPS activation may not include the 1-bit information. Here, the HPN value of the activated DCI may indicate to distinguish between unicast SPS and group common SPS. For example, unicast SPS and group common SPS may be mapped to different HPNs.

In this case, the same SPS configuration index is not mapped to the group common SPS and unicast SPS at the same time, and may only be mapped to the group common SPS or unicast SPS. The UE may simultaneously activate the group common SPS and unicast SPS with the same SPS configuration index.

Additionally or alternatively, unicast SPS and group common SPS use different CS-RNTIs, and DCI for SPS activation may not include the 1-bit information. Here, the CS-RNTI value of the activated DCI may indicate to distinguish between unicast SPS and group common SPS.

Hereinafter, a fall-back method to support the case where the UE transmits unicast HARQ-ACK and multicast HARQ-ACK together is described.

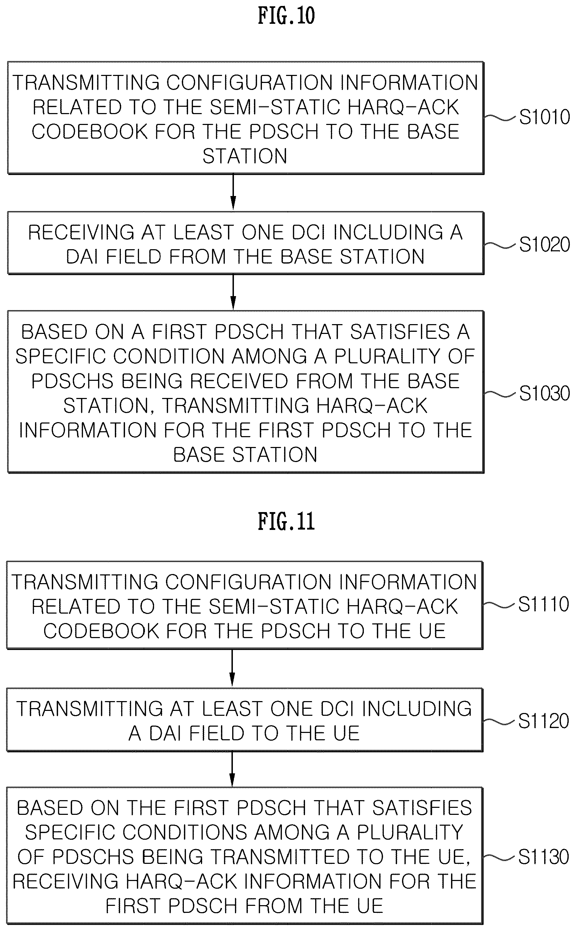

FIG. 10 is a diagram for describing an uplink transmission operation of a UE in a wireless communication system to which the present disclosure can be applied.

The UE may transmit configuration information related to the semi-static HARQ (hybrid automatic repeat request)-ACK (acknowledgement) codebook for the physical downlink shared channel (PDSCH) to the base station (S1010).

As an example, the configuration information may include information that configures whether the PDSCH HARQ-ACK codebook is a semi-static codebook (i.e., Type-1 codebook) or a dynamic codebook (Type-2 codebook). As another example, the configuration information may include information for configuring a (semi-static or dynamic) HARQ-ACK codebook (e.g., k1 set, HARQ-ACK transmission mode, time/frequency resource configuration information, etc.).

The UE may receive at least one downlink control information (DCI) including a downlink assignment index (DAI) field from the base station (S1020).

Each of the at least one DCI may be scrambled by a different or the same RNTI. For example, some of the at least one DCI may be CRC scrambled by G-CS-RNTI or G-RNTI, and the remainder of the at least one DCI may be scrambled by CS-RNTI, etc. However, this is only an example, and each of at least one DCI may be scrambled by various types of RNTI.

Additionally, each of the at least one DCI may include a DAI field (e.g., a first DAI field and/or a second DAI field). The DAI field may be configured to indicate a specific value (e.g., 1), but may also be configured to indicate a value other than a specific value.

Based on a first PDSCH that satisfies a specific condition among a plurality of PDSCHs being received from the base station, the UE may transmit HARQ-ACK information for the first PDSCH to the base station (S1030).

Specifically, when the first PDSCH satisfying a specific condition is received (or detected) in a plurality of candidate PDSCH reception occasions, and the other PDSCH satisfying a specific condition (e.g., fall-back condition) is not received (or detected), the UE may independently transmit HARQ-ACK information (e.g., 1 bit of HARQ-ACK information) for the first PDSCH to the base station.

As an example, a PDSCH that satisfies the specific conditions may include a G(group)-RNTI(radio network temporary identifier) or G-CS(configured scheduling)-SPS(semi-persistent scheduling) scrambled by RNTI group-common SPS PDSCH, or a group common PDSCH scheduled by the at least one DCI with CRC scrambled on G-RNTI or G-CS-RNTI.

As another example of the present disclosure, based on the DAI field included in at least one DCI associated with a plurality of PDSCHs indicating a specific value (e.g., 1), the UE may transmit a semi-static HARQ-ACK codebook including HARQ-ACK information for each of a plurality of PDSCHs to the base station.

As an example, when the DAI field included in at least one DCI associated with a plurality of PDSCHs indicates a specific value (e.g., 1), the UE may configure 1 bit of HARQ-ACK information for each of a plurality of PDSCHs. Additionally, the UE may construct a HARQ-ACK codebook with 1 bit of HARQ-ACK information for each of a plurality of PDSCHs and transmit it to the base station.

Another example of the present disclosure, based on a first PDSCH among a plurality of PDSCHs and a second PDSCH that does not satisfy a specific condition being received from the base station, the UE may transmit a semi-static codebook for multiple PDSCHs to the base station. That is, when a PDSCH that satisfies the fall-back condition and a PDSCH that does not satisfy the fall-back condition are received, the UE may configure a full semi-static codebook based on the k1 set and TDRA configurations for a plurality of PDSCHs, and transmit the configured full semi-static codebook to the base station.

As another example of the present disclosure, at least one DCI may include a first DCI and a second DCI. Based on the DAI field included in the first DCI indicating a specific value (e.g., 1) and the second DCI field not indicating the specific value, the UE may transmit a semi-static codebook for multiple PDSCHs to the base station.

For example, if the DAI field of a DCI associated with one G-RNTI indicates 1 and the DAI field of a DCI associated with another G-RNTI does not indicate 1, the UE may configure a full semi-static codebook based on the k1 set and TDRA configurations for a plurality of PDSCHs, and transmit the configured full semi-static codebook to the base station.

Additionally or alternatively, the plurality of PDSCHs may include a first PDSCH and a second PDSCH, the first PDSCH may be a multicast PDSCH scheduled by a multicast DCI among at least one DCI, and the second PDSCH may be a unicast PDSCH scheduled by a unicast DCI among at least one DCI.

Based on the second PDSCH (i.e., unicast PDSCH) satisfying a specific condition, the UE may configure HARQ-ACK information (e.g., 1 bit of HARQ-ACK information) for the second PDSCH and transmit it to the base station. Here, the UE may concatenate HARQ-ACK information for the first PDSCH and HARQ-ACK information for the second PDSCH and transmit it to the base station.

However, this is only an example, and the first PDSCH is a unicast PDSCH, and the DAI field of the DCI scheduling the first PDSCH among at least one DCI may indicate a specific value. Here, the UE may transmit HARQ-ACK information (e.g., 1 bit of HARQ-ACK information) for the first PDSCH to the base station.

Additionally or alternatively, based on a (single) multicast DCI with CRC scrambled by G-RNTI or G-CS-RNTI among at least one DCI being received from the base station, the UE may transmit HARQ-ACK information for (single) multicast DCI to the base station.

Here, the single multicast DCI may include a DAI value for activating or releasing a group-common SPS PDSCH among a plurality of PDSCHs.

FIG. 11 is a diagram for describing an uplink reception operation of a base station in a wireless communication system to which the present disclosure may be applied.

The base station may transmit configuration information related to the semi-static (or Type-1) HARQ-ACK codebook for the PDSCH to the UE (S1110).

That is, the base station may transmit configuration information related to the HARQ-ACK codebook for the PDSCH (e.g., type of HARQ-ACK codebook, resources and mode for transmitting HARQ-ACK information, etc.) to be transmitted by the UE to the UE.

The base station may transmit at least one DCI including the DAI field to the UE (S1120).

Based on the first PDSCH that satisfies specific conditions among a plurality of PDSCHs being transmitted to the UE, the base station may receive HARQ-ACK information for the first PDSCH from the UE (S1130).

That is, based on the UE detecting/receiving only the first PDSCH that satisfies a specific condition among multiple candidate PDSCH reception occasions, the base station may receive HARQ-ACK information (e.g., 1 bit of HARQ-ACK information) for the first PDSCH from the UE.

Operations and parameters related to S1010, S1020, and S1030 may correspond to operations and parameters related to S1110, S1120, and S1130.

Hereinafter, a fall-back method to support the case where the terminal transmits unicast HARQ-ACK and multicast HARQ-ACK together is described in detail.

Embodiment 1: Fall-back method of Type-1 codebook for multicast HARQ-ACK

When the Type-1 codebook is configured, the UE may perform a fall-back operation for each set G-RNTI/G-CS-RNTI or for all set G-RNTI/G-CS-RNTIs as follows.

To configure the Type-1 HARQ-ACK codebook for the G-RNTI or G-CS-RNTI that the UE wants to receive among candidate PDSCH reception occasions:

if UE detects only a group-common SPS PDSCH scrambled by the given G-RNTI or G-CS-RNTI, or only a group-common PDSCH scheduled by multicast DCI format 4-1 with CRC scrambled by the given G-RNTI or G-CS-RNTI and counter DAI value of 1, or only a single multicast DCI format 4-1 with CRC scrambled by the given G-RNTI or G-CS-RNTI and DAI value of 1 for activating group common SPS PDSCH, or only a single multicast DCI format 4-1 with CRC scrambled by the given G-RNTI or G-CS-RNTI and DAI value of 1 for releasing group common SPS PDSCH, the UE may determine the corresponding HARQ-ACK sub-codebook for the given G-RNTI or G-CS-RNTI comprises only a single HARQ-ACK information bit for the group-common SPS PDSCH, or the group-common PDSCH, or the single DCI format 4-1 for group common SPS PDSCH activation, or the single DCI format 4-1 for group common SPS PDSCH release (i.e., fallback operation for Type-1 codebook construction), otherwise;
the UE may determine the corresponding HARQ-ACK sub-codebook for a given G-RNTI or G-CS-RNTI according to the k1 set and TDRA configuration (i.e., general Type-1 codebook configuration).

That is, in the above-described operation, the fall-back condition of the UE for the candidate PDSCH reception occasion relates to whether the UE detects only a group-common SPS PDSCH scrambled by the given G-RNTI or G-CS-RNTI, or only a group-common PDSCH scheduled by multicast DCI format 4-1 with CRC scrambled by the given G-RNTI or G-CS-RNTI and counter DAI value of 1, or only a single multicast DCI format 4-1 with CRC scrambled by the given G-RNTI or G-CS-RNTI and DAI value of 1 for activating group common SPS PDSCH, or only a single multicast DCI format 4-1 with CRC scrambled by the given G-RNTI or G-CS-RNTI and DAI value of 1 for releasing group common SPS PDSCH,

In one embodiment of the present disclosure, additional fall-back conditions may be applied to the above-described fall-back operation. That is, a UE that receives PDSCH(s) for one or more G-RNTIs can perform a fall-back operation according to additional fall-back conditions that will be described later.

Option 1 : Only when each fall-back condition is satisfied for all configured G-RNTIs or G-CS-RNTIs, the UE may configure the corresponding HARQ-ACK sub-codebook with a single HARQ-ACK information bit for each G-RNTI or G-CS-RNTI, and may transmit the configured corresponding HARQ-ACK sub-codebook (to the base station).

Here, the UY may configure one HARQ-ACK sub-codebook for all G-RNTIs or G-CS-RNTIs. Alternatively, the UE may configure each HARQ-ACK sub-codebook for each G-RNTI or G-CS-RNTI.

Additionally or alternatively, if there is a G-RNTI or G-CS-RNTI that does not satisfy the fall-back conditions, the UE may configure a type-1 codebook according to the k1 set and TDRA configurations for all G-RNTIs or G-CS-RNTIs, and transmit the configured HARQ-ACK sub-codebook (to the base station).

Option 2 : the UE may configure the corresponding HARQ-ACK sub-codebook with a single HARQ-ACK information bit for each G-RNTI or G-CS-RNTI that satisfies the fall-back condition, and may transmit the configured HARQ-ACK sub-codebook (to the base station).

Here, the UE may configure a full type-1 codebook according to the K1 set and TDRA configurations for G-RNTI or G-CS-RNTI that does not satisfy the fall-back condition, and may transmit the configured HARQ-ACK sub-codebook (to the base station).

Option 2-1: If the fall-back conditions are satisfied for each G-RNTI or there is no reception that does not meet the fall-back conditions for other G-RNTIs, the UE may independently perform a fall-back operation only for the corresponding G-RNTI.

That is, the UE may configure the corresponding HARQ-ACK sub-codebook with a single HARQ-ACK information bit for the corresponding G-RNTI or G-CS-RNTI, and may transmit the configured HARQ-ACK sub-codebook (to the base station).

Additionally or alternatively, the UE may configure a full type-1 codebook for the remaining G-RNTI or G-CS-RNTI according to the K1 set and TDRA configurations.

Additionally or alternatively, even if the fall-back condition is satisfied for a specific G-RNTI, if there is reception that does not meet the fall-back condition for another G-RNTI, the UE may configure the entire type-1 codebook according to the k1 set and TDRA configurations for all G-RNTIs.

Option 2-2: When the DAI field of DCI indicates 1 for only one G-RNTI, and there is no DAI reception or DCI reception for other G-RNTIs, the UE may configure the corresponding HARQ-ACK sub-codebook with a single HARQ-ACK information bit for all G-RNTIs and G-CS-RNTIs, respectively. The UE may transmit the configured HARQ-ACK sub-codebook (to the base station). In other words, the UE may perform a fall-back operation.

Otherwise, the UE may not perform the fall-back operation. That is, the UE may configure the entire type-1 codebook according to the k1 set and TDRA configurations for all G-RNTIs. Therefore, if each DAI field for all G-RNTIs indicates all 1 in DCI, the UE may not perform a fall-back operation.

Option 2-3: The UE may perform a fallback operation for all G-RNTIs only if the DAI field of each DCI for all G-RNTIs all indicates 1. That is, the UE may configure the corresponding HARQ-ACK sub-codebook with a single HARQ-ACK information bit for all G-RNTIs and G-CS-RNTIs, respectively. The UE may transmit the configured HARQ-ACK sub-codebook (to the base station).

Otherwise (i.e., if the DAI field of each DCI does not indicate all 1 for all G-RNTIs), the UE may not perform a fallback operation. That is, the UE may configure the entire type-1 codebook according to the K1 set and TDRA configurations for all G-RNTIs.

Option 2-4: When one multicast sub-codebook is configured for all G-RNTIs set in the Type-1 codebook, if the fallback condition is satisfied for one or more G-RNTI or G-CS-RNTI (for example, if the DAI field of DCI indicates 1), regardless of receiving DAI or DCI for other G-RNTIs, the UE may perform a fall-back operation for all G-RNTIs and G-CS-RNTIs configured as multicast.

That is, for all G-RNTIs and G-CS-RNTIs configured as multicast, the UE may configure the corresponding HARQ-ACK sub-codebook with each corresponding single HARQ-ACK information bit (e.g., a single HARQ-ACK information bit corresponding to each of all G-RNTIs and G-CS-RNTIs), and may transmit the configured HARQ-ACK sub-codebook (to the base station).

As an example of the present disclosure, assume that a sub-codebook for each G-RNTI is configured for a plurality of G-RNTIs in the Type-1 codebook.

If one G-RNTI or G-CS-RNTI satisfies the fall-back condition (e.g., if the DAI field of the DCI indicates 1), the UE may perform the fall-back operation for the corresponding G-RNTI or G-CS-RNTI. That is, the UE may configure the corresponding HARQ-ACK sub-codebook with a single HARQ-ACK information bit for each of the corresponding G-RNTI or G-CS-RNTI.

If each of multiple G-RNTIs or G-CS-RNTIs satisfies the fall-back condition (e.g., if the DAI field of each DCI indicates 1), the UE may perform the fall-back operation for each of the G-RNTIs or G-CS-RNTIs. That is, the UE may configure a corresponding HARQ-ACK sub-codebook for each of the G-RNTIs or G-CS-RNTIs through a single HARQ-ACK information bit.

If one or more other G-RNTI or G-CS-RNTI each does not satisfy the fallback condition (e.g., if the DAI field of each DCI does not indicate 1), the UE may not perform a fall-back operation for each of the corresponding G-RNTI or G-CS-RNTI. That is, the UE may configure the entire Type-1 HARQ-ACK sub-codebook corresponding to each corresponding G-RNTI or G-CS-RNTI.

Here, the codebook may be constructed by concatenating HARQ-ACK sub-codebooks for one or more G-RNTIs that perform or do not perform fall-back operation in ascending or descending order of G-RNTI values, and the UE may transmit the constructed codebook to (base station).

As an example of the present disclosure, when configuring one multicast sub-codebook for all G-RNTIs configured in the Type-1 codebook, upon receiving a fall-back indication for the G-RNTI DCI (i.e., DCI scrambled by CRC by G-RNTI), the UE may perform a fall-back operation for the entire multicast.

However, if constructing a sub-codebook for each of a plurality of G-RNTIs, when a fall-back instruction is received through the DCI for each G-RNTI, the UE may perform a fall-back operation only for the corresponding G-RNTI.

Option 3: When both unicast and multicast are configured to Type-1 codebook and the fall-back condition is satisfied for all configured G-RNTIs in which the UE is interested, if the fall-back condition for unicast is satisfied, the UE may perform a fall-back operation. Therefore, the UE may concatenate a single HARQ-ACK information bit for unicast and a single HARQ-ACK information bit for each G-RNTI and transmit it to (base station).

Otherwise, the UE may not perform the fall-back operation. That is, the UE may configure a Type-1 sub-codebook according to the K1 set and TDRA configurations for unicast, and configure a Type-1 sub-codebook according to the K1 set and TDRA configurations for all G-RNTIs. And, the UE may connect the Type-1 sub-codebook for each unicast and all G-RNTIs and transmit it to the (base station).

In describing the present disclosure, 'unicast' may include unicast transmission or/and HARQ-ACK information (or/and codebook) for unicast transmission. Additionally, 'multicast' may include multicast transmission or/and HARQ-ACK information (or/and codebook) for multicast transmission.

Option 4: When both unicast and multicast are configured to type-1 codebook, if the counter DAI field of unicast DCI indicates a specific value, the UE may perform a fall-back operation. Therefore, the UE may concatenate a single HARQ-ACK information bit for unicast and a single HARQ-ACK information bit for each G-RNTI and transmit it to (base station).

If not, the UE may not perform the fall-back operation. That is, the UE may configure a Type-1 sub-codebook according to the k1 set and TDRA configurations for unicast, and configure a Type-1 sub-codebook according to the K1 set and TDRA configurations for all G-RNTIs. The UE may concatenate sub-codebooks for each unicast and all G-RNTIs and transmit them to (base station).

Option 5: When both unicast and multicast are configured to Type-1 codebook, if the counter DAI field of the unicast DCI indicates 1 and there is no multicast transmission, the UE may perform a fall-back operation.

Therefore, the UE may connect a single HARQ-ACK information bit for unicast and a single HARQ-ACK information bit for each G-RNTI and transmit it to (base station).

Additionally or alternatively, if both unicast and multicast are configured to Type-1 codebook, if the counter DAI field of the multicast DCI indicates 1 and there is no unicast transmission, the UE may perform a fall-back operation.

Therefore, the UE may connect a single HARQ-ACK information bit for unicast and a single HARQ-ACK information bit for each G-RNTI and transmit it to (base station).

Option 6: Assume that unicast and multicast are configured to different types of codebooks.

If the Type-1 codebook is configured for unicast and the counter DAI field of the unicast DCI indicates 1, regardless of whether multicast is transmitted, the UE may perform fall-back operation only for unicast. Therefore, the UE may configure a single HARQ-ACK information bit for unicast and configure a sub-codebook for unicast.

If only multicast is configured to the Type-1 codebook and the counter DAI field of the multicast DCI indicates 1, regardless of whether unicast transmission is performed, the UE may perform fall-back operation only for multicast. Therefore, the UE may configure a sub-codebook for multicast by configuring a single HARQ-ACK information bit for the configured G-RNTI.

Here, the UE may configure a sub-codebook for multicast using one or more of the above options. For example, the UE may configures the corresponding HARQ-ACK sub-codebook with a single HARQ-ACK information bit for all G-RNTIs and G-CS-RNTIs, or for each of one or more G-RNTIs or G-CS-RNTIs, and may transmit the configured HARQ-ACK sub-codebook.

Embodiment 2 : a downlink assignment index (DAI) of the DCI method for constructing a multicast HARQ-ACK codebook

The UE may configure the Type-2 codebook in a manner described later according to the base station configurations.

The base station may allocate UL PUSCH resources or schedule DL PDSCH transmission for the terminal through DCI. Here, the DCI transmitted by the base station to allocate UL PUSCH resources is abbreviated as UL DCI, and the DCI transmitted by the base station to schedule DL PDSCH transmission is abbreviated as DL DCI.

The UE may receive a PUCCH resource indicator (PRI) through group common DCI or UE-specific DCI, and may transmit HARQ-ACK information for the PDSCH scheduled by the group common DCI or UE-specific DCI through the PUCCH resource indicated by PRI.

If the corresponding PUCCH transmission overlaps with the PUSCH transmission, the UE may transmit PUSCH instead of PUCCH and transmit UCI including the HARQ-ACK information by piggybacking on the PUSCH.

When type-2 codebook is configured for HARQ-ACK of multicast PDSCH, the group common DCI scheduling the group common PDSCH for a specific G-RNTI may include counter DAI and total DAI. Counter DAI indicates the order of PDSCHs currently scheduled for a specific G-RNTI, and total DAI indicates the total number of PDSCHs currently scheduled for a specific G-RNTI.

TB transmitted by PDSCH scheduled with group common DCI may be retransmitted through PTP retransmission. In this case, the UE may obtain PDSCH transmission information for the corresponding TB using the UE-only DL DCI whose CRC is scrambled with C-RNTI. Here, DL DCI may include counter DAI and total DAI for G-RNTI corresponding to TB.

For example, assume that the same TB is scheduled twice with two group common DCIs and scheduled a third time with PTP retransmission. Here, the previous two group common DCIs are transmitted with the [counter DAI, total DAI] values set to [0, 0] and [1,1], respectively. The UE-specific DCI for PTP retransmission can be set to [2,2] following the value of the group common DCI and transmitted.

Additionally or alternatively, the DAI value of the DCI for PTP retransmission may be configured separately from the value of the group common DCI. As an example, the [counter DAI, total DAI] value of the DCI for PTP retransmission may be configured in succession to the [counter DAI, total DAI] value of the previously transmitted unicast DCI.

UL DCI, whose CRC is scrambled with C-RNTI, may include the total DAI for the G-RNTI transmission. For example, when a UL DCI is transmitted immediately after two group common DCIs, the total DAI of the UL DCI may be configured to 1 and transmitted. Additionally, when the UL DCI is transmitted immediately after PTP retransmission, the total DAI of the UL DCI may be configured to 2 and transmitted.

That is, considering the case where the UE does not receive the DL DCI transmitted immediately before the UL DCI, the base station may indicate the total DAI for UCI transmission of the PUSCH through the UL DCI.

Unicast and multicast HARQ-ACK with the same priority can be multiplexed on the same PUSCH. In this case, DCI scheduling PUSCH may include a UL DAI field as follows.

If both unicast and multicast HARQ-ACK codebooks are Type-1, Option 1-1, Option 1-2, and Option 1-3 below may be applied.

Option 1-1: A 1-bit UL DAI with the value "1" may indicate that unicast and multicast HARQ-ACK codebooks are multiplexed into the same PUSCH.

Option 1-2: 2-bit UL DAI may individually indicate whether to multiplex unicast and/or multicast HARQ-ACK codebook into the same PUSCH.

If only one sub-codebook is configured for all configured G-RNTIs, 1 bit of the 2-bit UL DAI indicating whether to multiplex the multicast HARQ-ACK codebook on the same PUSCH can be applied to all configured G-RNTIs.

When N different sub-codebooks are configured for N different configured G-RNTIs, 1 bit of the 2-bit UL DAI, which indicates whether the multicast HARQ-ACK codebook is multiplexed with the same PUSCH, may be applied to only one G-RNTI among the configured G-RNTIs. Here, the corresponding G-RNTI may have high priority. Alternatively, the corresponding G-RNTI may be indicated by the network. Alternatively, the G-RNTI may correspond to the most recently scheduled PDSCH.

Option 1-3: N+1 bit UL DAI may individually indicate whether to multiplex unicast and/or multicast HARQ-ACK codebook into the same PUSCH. When N different sub-codebooks are configured for N different configured G-RNTIs, N-bit UL DAI, which indicates whether to multiplex the multicast HARQ-ACK codebook with the same PUSCH, may be applied to each of N different configured G-RNTIs.

That is, 1 bit of UL DAI may be applied to one single G-RNTI to indicate whether to multiplex the multicast HARQ-ACK subcodebook applicable to the G-RNTI to the same PUSCH.

As an example of the present disclosure, when both unicast and multicast HARQ-ACK codebooks are configured to Type-2, option 2-1 and option 2-2 may be applied.

Option 2-1: 2-bit UL DAI may be applicable to both HARQ-ACK codebooks.

Option 2-2: In addition to 2-bit UL DAI for unicast, 2-bit UL DAI may be included in DCI for multicast.

Whether a single UL DAI field is applied to all G-RNTIs or a separate UL DAI field is applied to each configured G-RNTI may be configured or predefined by the base station.

As an example of the present disclosure, assume that unicast and multicast HARQ-ACK codebooks are respectively set as Type-1 codebook and Type-2 codebook.

Here, 1-bit UL DAI for unicast may be included in DCI, and 1-bit UL DAI may indicate whether to multiplex the unicast HARQ-ACK codebook on the same PUSCH.

Additionally, 2-bit UL DAI for multicast may be additionally included in the DCI, and the 2-bit UL DAI may indicate the number of HARQ-ACK bits for the multicast type 2 codebook.

As another example of the present disclosure, assume that unicast and multicast HARQ-ACK codebooks are configured to Type-2 codebook and Type-1 codebook, respectively.

Here, 1-bit UL DAI for multicast may be included in DCI, and 1-bit UL DAI may indicate whether to multiplex the multicast HARQ-ACK codebook on the same PUSCH.

If only one sub-codebook is configured for all configured G-RNTIs, 1 bit of the 2-bit UL DAI indicating whether to multiplex the multicast HARQ-ACK codebook on the same PUSCH can be applied to all configured G-RNTIs.

When N different sub-codebooks are configured for N different configured G-RNTIs, it may be applied only to one G-RNTI in which 1 bit of the 2-bit UL DAI indicating whether to multiplex the multicast HARQ-ACK codebook on the same PUSCH is configured. Here, the corresponding G-RNTI may have high priority. And, the corresponding G-RNTI may be indicated by the network and may correspond to the most recently scheduled PDSCH.

Additionally, 2-bit UL DAI for unicast may be additionally included in DCI. The 2-bit UL DAI may indicate the number of HARQ-ACK bits for the unicast type 2 codebook.

Embodiment 2-1: Configuration and transmission / reception method of UL DCI separating total DAI for unicast and total DAI for multicast

UL DCI may include total DAI for multicast for multicast HARQ-ACK separately from total DAI for unicast for unicast HARQ-ACK as follows.

Method 1-1: A plurality of bits in the DAI field of UL DCI may separately indicate total DAI for unicast and total DAI for multicast.

As an example, the N LSB bits and M MSB bits of the first or second DAI field of DCI 0_1 may separately indicate total DAI for unicast and total DAI for multicast, respectively.

Additionally or alternatively, the N MSB bits and M LSB bits of the first or second DAI field of DCI 0_1 can separately indicate total DAI for unicast and total DAI for multicast, respectively.

Method 1-2: A reserved field or a specific field of UL DCI may indicate the total DAI for multicast.

As an example, the 'ChannelAccess-CPext' field of DCI 0_1 may indicate the total DAI for multicast.

If the UE is receiving a PDSCH for multiple G-RNTIs, the UL DCI may indicate the total DAI value for multicast as an option described later.

Option 1: UL DCI may indicate the sum of the total DAI values for all G-RNTIs that the terminal wants to receive or reports as being of interest.

For example, assume that the UE reports to the base station to receive G-RNTI #1 and G-RNTI #2. If the current total DAI for G-RNTI #1 is 2 and the current total DAI for G-RNTI #2 is 3, the total DAI of UL DCI may indicate 5, which is 2+3.

Option 2: UL DCI may indicate an individual total DAI value for each G-RNTI that the terminal wants to receive or reports as being of interest. In other words, UL DCI may indicate the total DAI value for each G-RNTI.

As an example, assume that the UE reports to the base station to receive G-RNTI #1 and G-RNTI #2. If the current total DAI for G-RNNT I#1 is 2 and the current total DAI for G-RNTI #2 is 3, UL DCI separately may include two total DAIs, and each total DCI can indicate 2 and 3.

An individual total DAI value may be indicated through one field, and multiple total DAI values within one field can be concatenated to form one bit string or bitmap.

As an example, assume that the different total DAI values for two G-RNTIs are each N bits. A bit string or bitmap may be constructed such that total DAI values for low G-RNTI values corresponds to N LSB bits or N MBS bits and the total DAI value for a high G-RNTI value corresponds to N MSB bits or N LBS bits.

Separate total DAI values for all G-RNTIs may not be indicated due to limited field size, etc. In this case, the base station may indicate the total DAI for each G-RNTI as an option described later.

Option 2-1: The base station may indicate the total DAI for each G-RNTI only up to the maximum number of G-RNTIs.

As an example, if the maximum number of G-RNTIs is configured to 2 in the RRC message, when the UE reports to the base station that it wants to receive G-RNTI #1, G-RNTI #2, and G-RNTI #3, the base station may configure the UL DCI to indicate only the total DAIs for the two G-RNTIs with high or low G-RNTI values among G-RNTI #1, G-RNTI #2, and G-RNTI #3, respectively.

Alternatively, if the maximum number of G-RNTIs is configured to 2 in the RRC message, when the UE reports to the base station that it wants to receive G-RNTI #1, G-RNTI #2, and G-RNTI #3, the base station may configure the UL DCI to indicate only the total DAIs for the two highest priority G-RNTIs among G-RNTI #1, G-RNTI #2, and G-RNTI #3, respectively.

Alternatively, if the maximum number of G-RNTIs is configured to 2 in the RRC message, if the UE reports to the base station to receive G-RNTI #1, G-RNTI #2, and G-RNTI #3, the base station may configure the UL DCI to indicate only the total DAIs for the two G-RNTIs pre-designated in the RRC message among G-RNTI #1, G-RNTI #2, and G-RNTI #3.

Option 2-2: UL DCI may indicate the total DAI for each G-RNTI only for some selected G-RNTIs.

As an example, if the UE reported to the base station to receive G-RNTI #1, G-RNTI #2, and G-RNTI #3, the base station may configure the UL DCI to indicate only the total DAIs for the two G-RNTIs notified to the UE in the RRC message. Therefore, the total DAI for an unselected G-RNTI may not be included in the UL DCI.

Alternatively, if the UE reports to the base station that it wishes to receive G-RNTI #1, G-RNTI #2, and G-RNTI #3, (even if the base station does not inform it), the UE may recognize that only the total DAIs for two G-RNTIs with high or low G-RNTI values are indicated by UL DCI.

Alternatively, if the UE reports to the base station that it wishes to receive G-RNTI #1, G-RNTI #2, and G-RNTI #3, (even if the base station does not notify), the UE may recognize that only total DAIs for G-RNTIs with high priority (e.g., HP) are indicated by UL DCI.

Option 3: UL DCI may only indicate the total DAI value with the highest value among the individual total DAI values for each G-RNTI that the terminal wants to receive or reports as being of interest.

As an example, assume that the UE reports to the base station to receive G-RNTI #1 and G-RNTI #2. If the current total DAI for G-RNTI #1 is 2 and the current total DAI for G-RNTI #2 is 3, the UL DCI may indicate 3, which has the highest total DAI value of the two. Here, UL DCI may additionally indicate an index for G-RNTI #2.

Option 4: All G-RNTIs that the UE wants to receive or are reported to be interested in are grouped into multiple G-RNTI groups, and total DAI can be indicated for each G-RNTI group.

For example, if the UE reports to the base station to receive G-RNTI #1, G-RNTI #2, and G-RNTI #3, the base station may group G-RNTI #1 and G-RNTI #2 into the first G-RNTI group and designate G-RNTI #3 as the second G-RNTI group with an RRC message. After this, the base station may configure the UL DCI to indicate the total DAIs for each of the two G-RNTI groups.

Here, the total DAI value of the first G-RNTI group may indicate the sum of the total DAI values for all G-RNTIs in the group, as in option 1.

Alternatively, the total DAI value of the first G-RNTI group may indicate the highest total DAI value for all G-RNTIs in the group, as in option 3.

Here, the total DAI value of the second G-RNTI group, which includes only one G-RNTI, may be equal to the total DAI value of G-RNTI #3.

If there is a total DAI value of G-RNTI that is missing according to the total DAI indication method of UL DCI, the UE may configure a Type-2 based HARQ-ACK codebook only based on the total DAI of DL DCI.

Embodiment 2-2: UL DCI method combining total DAI for unicast and total DAI for multicast

Here, the UL DCI may combine the total DAI for unicast for unicast HARQ-ACK and the total DAI for multicast for multicast HARQ-ACK and indicate as an option to be described later.

Meanwhile, instead of UL DCI, the DAI values of the options below may be transmitted to the UE through the group common MAC CE. Here, PDSCH resources transmitting group common MAC CE may be allocated by UL DCI.

Option 1: UL DCI may indicate the sum of the total DAI value of all G-RNTIs that the UE wants to receive or reported as being interested in and the total DAI value for unicast transmission.

As an example, assume that the UE reports to the base station to receive G-RNTI #1 and G-RNTI #2. If the current total DAI for G-RNTI #1 is 2, the current total DAI for G-RNTI #2 is 3, and the current total DAI for unicast is 1, the total DAI of UL DCI may indicate 6, which is 2+3+1.

Option 2: UL DCI may separately indicate the individual total DAI value for each G-RNTI that the UE wants to receive or reports as being of interest, and the total DAI value for unicast. That is, UL DCI may indicate the total DAI value for each G-RNTI and the total DAI value for unicast, respectively.

For example, assume that the UE reports to the base station to receive G-RNTI #1 and G-RNTI #2. If the current total DAI for G-RNNT I#1 is 2, the current total DAI for G-RNTI #2 is 3, and the current total DAI for unicast is 1, UL DCI separately may include three total DAIs, and each of the three total DAIs may indicate 1, 2, and 3.

An individual total DAI value may be indicated through one field, and multiple total DAI values within one field can be concatenated to form one bit string or bitmap.

As an example, assume that the different total DAI values for two G-RNTIs are each N bits. A bit string or bitmap may be configured such that total DAI values for low G-RNTI values corresponds to N LSB bits or N MBS bits and total DAI value for high G-RNTI value corresponds to N MSB bits or N LBS bits. Subsequently, the total DAI value for unicast may be concatenated to form a final corresponding bit string or bitmap.

All total DAI values may not be indicated due to limited field size, etc. In this case, the base station may indicate the total DAI for unicast and the total DAI for each G-RNTI as an option described later.

Option 2-1: The base station may indicate to the terminal the total DAI for each G-RNTI only up to the maximum number of G-RNTIs.

As an example, when the maximum number of G-RNTIs is configured to 2 in the RRC message, it is assumed that the terminal reports to the base station to receive G-RNTI #1, G-RNTI #2, and G-RNTI #3. The base station may configure the UL DCI to indicate only the total DAI for each of the two G-RNTIs with high or low G-RNTI values among G-RNTI #1, G-RNTI #2, and G-RNTI #3. Additionally, UL DCI may be configured by the base station to indicate or not indicate the total DAI for unicast together.

Alternatively, if the maximum number of G-RNTIs is configured to 2 in the RRC message, when the UE reports to the base station to receive G-RNTI#1, G-RNTI#2, and G-RNTI#3, the base station may configure the UL DCI to indicate only the total DAIs for the two G-RNTIs with high priority among these.

Additionally or alternatively, the UL DCI may be configured by the base station to jointly indicate or not indicate the total DAI for unicast. Alternatively, depending on the priorities for unicast and G-RNTIs, UL DCI may be configured to indicate only the total DAI(s) for unicast or G-RNTI with high priority, respectively.

Additionally or alternatively, when the maximum number of G-RNTIs is configured to 2 in the RRC message, it is assumed that the terminal reports to the base station to receive G-RNTI #1, G-RNTI #2, and G-RNTI #3. The base station may configure the UL DCI to indicate only the total DAIs for the two G-RNTIs pre-designated in the RRC message among these. Additionally, UL DCI may be configured by the base station to indicate or not indicate the total DAI for unicast together.

Option 2-2: The base station may indicate the total DAI for each G-RNTI only for some selected G-RNTIs. Additionally, UL DCI may be configured by the base station to indicate or not indicate the total DAI for unicast together.

As an example, when the UE reports to the base station to receive G-RNTI #1, G-RNTI #2, and G-RNTI #3, the base station may configure the UL DCI to indicate only the total DAIs for the two G-RNTIs notified to the UE in the RRC message. Therefore, the total DAI for an unselected G-RNTI may not be included in the UL DCI. Additionally, UL DCI may be configured by the base station to indicate or not indicate the total DAI for unicast together.

Additionally or alternatively, if the UE has reported to the base station that it wishes to receive G-RNTI#1, G-RNTI#2, and G-RNTI#3, (even if the base station does not inform it), the UE may recognize that only the total DAIs for two G-RNTIs with high or low G-RNTI values are indicated by UL DCI. Additionally, UL DCI may be configured to indicate or not indicate the total DAI for unicast by the base station.

Additionally or alternatively, when the UE reports to the base station that it wishes to receive G-RNTI #1, G-RNTI #2, and G-RNTI #3, (Even if the base station does not inform it), the UE may recognize that only the total DAIs for G-RNTIs with high priority (e.g., HP) are indicated by UL DCI.

Additionally or alternatively, the UL DCI may be configured by the base station to jointly indicate or not indicate the total DAI for unicast. Alternatively, depending on priority for unicast and G-RNTIs, the UE may recognize that only the total DAI(s) for high priority unicast (e.g. HP) or G-RNTI are indicated by UL DCI.

Option 3 : The base station may only indicate individual total DAI values for each G-RNTI that the UE wants to receive or reports as being interested in and a total DAI value with the highest value among DAI values for unicast.

As an example, assume that the UE reports to the base station to receive G-RNTI #1 and G-RNTI #2. If the current total DAI for G-RNTI #1 is 2, the current total DAI for G-RNTI #2 is 3, and the total DAI for unicast is currently 1, UL DCI may indicate 1 with the highest total DAI value. At this time, UL DCI may additionally indicate an index for G-RNTI #2.

Additionally or alternatively, assume that the UE reports to the base station to receive G-RNTI #1 and G-RNTI #2. If the current total DAI for G-RNTI #1 is 2, the current total DAI for G-RNTI #2 is 3, and the total DAI for unicast is currently 4, UL DCI may indicate 4, which has the highest total DAI value. Here, UL DCI may additionally indicate an index for unicast.

Option 4: All G-RNTIs that the UE wants to receive or reports as being of interest may be grouped into multiple G-RNTI groups, and the base station may indicate the total DAI for each G-RNTI group to the UE.

Additionally or alternatively, the UL DCI may be configured by the base station to jointly indicate or not indicate the total DAI for unicast. Alternatively, the total DAI for unicast may be configured to be included in a specific G-RNTI group.

As an example, if the UE reported to the base station to receive G-RNTI #1, G-RNTI #2, and G-RNTI #3, the base station may group G-RNTI #1 and G-RNTI #2 into the first group and designate G-RNTI #3 and unicast as the second group with an RRC message. After this, the base station may configure the UL DCI to indicate the total DAIs for each of the two groups.

Here, the total DAI value of each group may indicate the sum of all total DAI values in the group, as in option 1. Alternatively, the total DAI value of each group may indicate the highest total DAI value within the group, as in option 3.

Embodiment 3: Type-2 codebook configuration method according to HARQ-ACK disabling

HARQ-ACK transmission for PDSCH reception of a specific G-RNTI may be enabled or disabled by the indication of the group common DCI or RRC configuration.

If HARQ-ACK transmission for a specific G-RNTI is disabled by RRC configurations, the UE may determine that the total DAI for the specific G-RNTI is not included in the UL DCI.

When HARQ-ACK transmission for a specific G-RNTI is disabled by DCI, Considering the case where the UE does not receive the corresponding DCI, the UE may determine that the total DAI for a specific G-RNTI is included in the UL DCI.

Additionally or alternatively, even when HARQ-ACK transmission for a specific G-RNTI is disabled in the DCI, the UE may determine that the total DAI for a specific G-RNTI is not included in the UL DCI.

In the above-described operation, the UL DCI may be replaced with either a DL DCI that is CRC scrambled to the corresponding G-RNTI or a DL DCI that schedules PTP transmission of the TB for the corresponding G-RNTI.

For group-common DCI indicating HARQ-ACK enabling/disabling, for Type-2 codebook generation, the UE may expect that all HARQ-ACK feedback for all PDSCHs transmitted in the same PUCCH slot will be enabled or all disabled.

If the HARQ-ACK feedbacks of all PDSCHs for the same PUCCH slot are not all disabled, the UE may configure a Type-2 codebook by determining that all DAIs for all PDSCHs are mode enabled.

Therefore, regardless of whether HARQ-ACK is enabled or disabled, the UE may interpret that all DAIs for all PDSCHs are activated and configure the HARQ-ACK information bits of the Type-2 codebook.

Additionally or alternatively, HARQ-ACK information bits of the Type-2 codebook may be configured only for actually enabled HARQ-ACK.

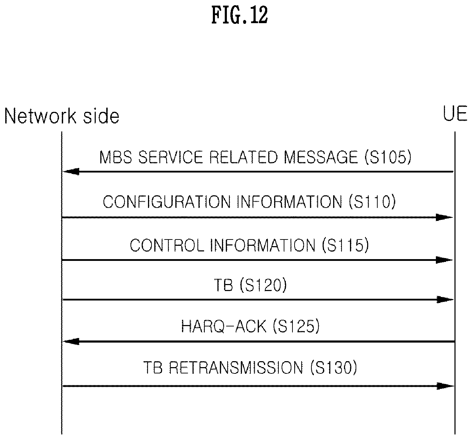

FIG. 12 is a diagram for describing the signaling procedure of the network side and the UE according to an embodiment of the present disclosure.

FIG. 12 shows an example of signaling between a network side and a terminal (UE) in a situation where the embodiments (e.g., Embodiment 1, Embodiment 2, Embodiment 3 or a combination of one or more of the detailed Embodiments thereof) of the present disclosure described above may be applied.

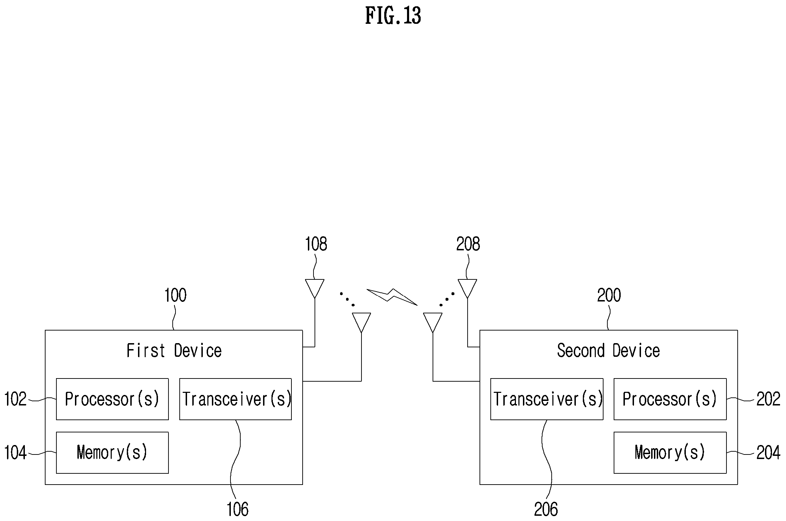

Here, the UE/network side is exemplary and may be applied to various devices as described with reference to FIG. 13. FIG. 12 is for convenience of description, and does not limit the scope of the present disclosure. In addition, some step(s) shown in FIG. 12 may be omitted depending on circumstances and/or settings. In addition, in the operation of the network side / UE of FIG. 12, the above-described uplink transmission/reception operation etc. may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP (Transmission and Reception Point), etc. In addition, a TP and/or a TRP may include a panel, a transmission and reception unit, etc. of a base station.

The UE may enter RRC_CONNECTED mode and report a message indicating one or more interested MBS services to the network (S105).

Here, the UE may transmit the message to the network through at least one of a UCI, MAC CE (Control Element), and RRC message. And, the MBS service of interest in the message may mean one of TMGI or G-RNTI listed in the DL message received from the network side.

For example, the DL message may be a service availability message listing TMGI #1, TMGI #3, TMGI #5, and TMGI #10. If the UE is interested in TMGI #5, the UE may indicate the order of TMGI #5 in the message. That is, the UE may report '3' to the network.

As another example, the DL message may be a service availability message listing G-RNTI #1, G-RNTI #3, G-RNTI #5, and G-RNTI #10. If the UE is interested in G-RNTI #10, the UE may indicate the order of G-RNTI #10 in the message. That is, the UE may report '4' to the network.

For example, the operation of the UE (100 or 200 in FIG. 13) in step S105 described above to transmit the message to the network side (200 or 100 in FIG. 13) may be implemented by the device in FIG. 13, which will be described below. For example, referring to FIG. 13, one or more processors 102 may control one or more transceivers 106 and/or one or more memories 104 to transmit the message, and one or more transceivers 106 may transmit the message to the network.

Upon receiving the message, the network side may transmit configuration information to the UE via an RRC message (S110).

For example, the configuration information may include search space configuration information including CFR (common frequency resource) configuration information, one or more group common PDSCH configurations information including TCI state for one or more G-RNTI values, and TCI status for one or more G-RNTI values.

Here, the RRC message may be a group common message transmitted through a PTM Multicast Control Channel (MCCH) or a UE-specific message transmitted through a UE-specific Dedicated Control Channel (DCCH).

And, CFR may include DL CFR and UL CFR. For example, one DL CFR may provide group common PDCCH and group common PDSCH transmission resources for MBS transmission and reception. One UL CFR may provide HARQ-ACK PUCCH resources for group common PDSCH reception. One CFR may be one MBS-specific BWP or one UE-specific BWP. Additionally or alternatively, one or multiple CFRs may be set within one UE-specific BWP. One CFR may have a connection relationship with one terminal-specific BWP.

The UE may be configured with at least a G-RNTI value for each MBS CFR or each serving cell. GC-CS-RNTI may be configured/used to activate(or enable), retransmit or release one or more group common SPS configurations.

If it is not configured with CFR for the UE or GC-CS-RNTI for the serving cell, and CS-RNTI is configured for the CFR or serving cell, the UE may use the CS-RNTI to activate, retransmit, or release one or more group common SPS configurations.

The network side may associate a TMGI list or a G-RNTI list with one GC-CS-RNTI value. At this time, the network side may provide a TMGI list or a G-RNTI list associated with the GC-CS-RNTI value.

Additionally, the configuration information (e.g., 'PDSCH-config') of each PDSCH may be configured as shown in Table 6 with the minimum information elements for multicast and/or broadcast.

【Table 7】

```
PDSCH-Config ::= SEQUENCE {
dataScramblingIdentityPDSCH INTEGER (0..1023) OPTIONAL, -- Need S
dmrs-DownlinkForPDSCH-MappingTypeA       SetupRelease      {      DMRS-
DownlinkConfig } OPTIONAL, -- Need M
dmrs-DownlinkForPDSCH-MappingTypeB       SetupRelease      {      DMRS-
DownlinkConfig } OPTIONAL, -- Need M
tci-StatesToAddModList SEQUENCE (SIZE(1..maxNrofTCI-States)) OF TCI-
State OPTIONAL, -- Need N
tci-StatesToReleaseList SEQUENCE (SIZE(1..maxNrofTCI-States)) OF TCI-
StateId OPTIONAL, -- Need N
vrb-ToPRB-Interleaver ENUMERATED {n2, n4} OPTIONAL, -- Need S
resourceAllocation       ENUMERATED      {      resourceAllocationType0,
resourceAllocationType1, dynamicSwitch},
pdsch-TimeDomainAllocationList       SetupRelease      {      PDSCH-
TimeDomainResourceAllocationList } OPTIONAL, -- Need M
pdsch-AggregationFactor ENUMERATED { n2, n4, n8 } OPTIONAL, -- Need S
rateMatchPatternToAddModList             SEQUENCE             (SIZE
(1..maxNrofRateMatchPatterns)) OF RateMatchPattern OPTIONAL, -- Need
N
rateMatchPatternToReleaseList            SEQUENCE             (SIZE
(1..maxNrofRateMatchPatterns)) OF RateMatchPatternId OPTIONAL, -- Need
N
rateMatchPatternGroup1 RateMatchPatternGroup OPTIONAL, -- Need R
rateMatchPatternGroup2 RateMatchPatternGroup OPTIONAL, -- Need R
rbg-Size ENUMERATED {config1, config2},
```

```
mcs-Table ENUMERATED {qam256, qam64LowSE} OPTIONAL, -- Need S
maxNrofCodeWordsScheduledByDCI ENUMERATED {n1, n2}
... }
```

For example, the operation of the UE (100 or 200 in FIG. 13) in step S110 described above receiving the configuration information from the network side (200 or 100 in FIG. 13) may be implemented by the device in FIG. 11, which will be described below. For example, referring to FIG. 11, one or more processors 102 may control one or more transceivers 106 and/or one or more memories 104 to receive the configuration information, and one or more transceivers 106 may receive the configuration information from a network side. The UE may receive control information from the network (S115). For example, the UE may receive downlink control information (DCI) for scheduling/activating/deactivating uplink/downlink from the network side.

Specifically, if a search space is configured for the configured CFR, the UE may receive CRC scrambled DCI with G-RNTI or G(group)-CS (configured scheduling)-RNTI by monitoring the PDCCH in the SS (search space) set in the configured CFR.

For example, the operation of the UE (100 or 200 in FIG. 13) in step S115 described above receiving the control information from the network side (200 or 100 in FIG. 13) may be implemented by the device in FIG. 13, which will be described below. For example, referring to FIG. 13, one or more processors 102 may control one or more transceivers 106 and/or one or more memories 104 to receive the control information, and one or more transceivers 106 may receive the control information from a network side.

The UE may receive TB from the network side (S120).

Specifically, if a data unit is available on the MTCH of the MBS radio bearer (MRB) for the MBS service, the network side may include a data unit for the SPS PDSCH occasion associated with the MTCH of the MRB for the MBS service, or associated with the TMGI of the MBS service, or associated with the short ID of the MBS service, or may construct the TB associated with the G-RNTI mapped to the MBS service according to the service-to-resource mapping and transmit it to the UE.

For group common dynamic scheduling of TB, the network side may transmit DCI to the UE through PDCCH. The DCI may be CRC scrambled by G-RNTI, G-CS-RNTI, or CS-RNTI. PDCCH may be implemented as a group common PDCCH or a UE-specific PDCCH.

For example, the DCI may include at least one of identifier for DCI format, carrier indicator, bandwidth part indicator, Frequency domain resource assignment, time domain resource allocation, VRB-to-PRB mapping, PRB bundling size indicator, rate matching indicator, ZP CSI-RS trigger, MCS, NDI, RV, HARQ process number, downlink allocation index, TPC command for scheduled PUCCH, PUCCH resource indicator, PDSCH-to-HARQ_feedback timing indicator, antenna port, transmission setup indication, SRS request, DMRS sequence initialization, priority indicator.

For group common dynamic scheduling, by group common or UE specific RRC message or by group common or UE specific MAC CE, the network side may provide the UE with one or more service-resource mappings for MBS services identified by TMGI or G-RNTI or GC-CS-RNTI. Data of the MBS service may be carried through the MBS radio bearer (MRB) of the multicast traffic logical channel, that is, the MTCH associated with the MBS service. The RRC message may be a group common message transmitted through a PTM Multicast Control Channel (MCCH) or a UE-specific message transmitted through a UE-specific Dedicated Control Channel (DCCH). The DCI scheduling PDSCH carrying MBS service data may also indicate one or more of a short ID, MTCH ID, MRB ID, G-RNTI value, and TMGI value for the MBS service.

When the UE receives the CRC scrambled DCI by the G-RNTI it wants to receive, the UE may determine the MBS service(s) associated with one or more of the short ID, MTCH ID, MRB ID, G-RNTI value, and TMGI value for each PDSCH occasion, based on the mapping between the MBS service indicated in the DCI and the HPN and/or the mapping between the MBS service indicated in the DCI and the short ID(s).

Then, if the UE is interested in the determined MBS service(s), the UE may receive the PDSCH transmission scheduled by the DCI. If the UE is not interested in the determined MBS service(s), the UE may not receive the PDSCH transmission scheduled by DCI.

For example, the operation of the UE (100 or 200 in FIG. 13) in step S120 described above to receive the TB from the network side (200 or 100 in FIG. 13) can be implemented by the device in FIG. 13, which will be described below. For example, referring to FIG. 13, one or more processors 102 may control one or more transceivers 106 and/or one or more memories 104 to receive the TB, and one or more transceivers 106 may receive the TB from a network side.

Upon receiving the group common DCI indicating the PUCCH resource for MBS HARQ-ACK, the UE may transmit HARQ-ACK through the PUCCH after receiving the PDSCH scheduled by the DCI (S125). That is, depending on the decoding state of PDSCH transmission, the UE may transmit HARQ feedback to the network.

For PTM scheme 1, the group common DCI may indicate a single PUCCH resource indicator and a single PDSCH-to-HARQ_feedback timing indicator at least for ACK/NACK-based HARQ-ACK.

Specifically, in the case of UE-specific PUCCH resource allocation for ACK/NACK-based HARQ-ACK for group common DCI, Other UEs in the group may be configured to a different value of at least 'PUCCH-Resource' and 'dl-DataToUL-ACK' in the UE-specific 'PUCCH-config' for multicast or unicast (unless 'PUCCH-config' for multicast is configured). Different PUCCH resources may be allocated to different UEs by the same PUCCH resource indicator and the same PDSCH-to-HARQ_feedback timing indicator of the group common DCI.

For PTP retransmission, in a UE-specific DCI, the PUCCH resource indicator and PDSCH-to-HARQ_feedback timing indicator may be interpreted based on 'PUCCH-config' for unicast regardless of whether 'PUCCH-config' for multicast is configured.

Here, PRI (PUCCH Resource Indicator) may be indicated by the group common DCI, as will be described later.

As an example, a UE-specific PRI list may be included in the DCI (Option 1A-1). Each PRI in that list may indicate an entry corresponding to the candidate 'pucch-ResourceId' value of 'PUCCH-config' for allocation of the same PUCCH resource or different PUCCH resources for different UEs in the group that received the same DCI. Different PRIs in the DCI can point to different entries in 'PUCCH-config'.

Here, the candidate 'pucch-ResourceId' value may be configured by RRC, and a different 'pucch-ResourceId' value may be configured for other UEs of the same group at least in multicast 'PUCCH-config'.

As another example, a group common PRI may be included in the DCI (Option 1A-2) . A single group common PRI may indicate a specific entry for a candidate 'pucch-ResourceId' value in the UE-specific 'PUCCH-config' for allocation of the same or different PUCCH resources for all UEs in the group.

And, the candidate 'pucch-ResourceId' value may be configured by RRC. At least in 'PUCCH-config' for multicast, different 'pucch-ResourceId' values may be configured for different UEs in the same group.

If 'PUCCH-config' for multicast is configured with HARQ-ACK to group common PDSCHs scheduled by group common DCI, the UE may assume that the PRI of the group common DCI indicates an entry corresponding to the candidate 'pucch-ResourceId' value of 'PUCCH-config' for multicast.

If 'PUCCH-config' for multicast is configured with HARQ-ACK to group common PDSCHs scheduled by group common DCI, the UE may assume that the PRI of the group common DCI indicates an entry corresponding to the candidate 'pucch-ResourceId' value of 'PUCCH-config' for multicast.

K1 (PDSCH-to-HARQ_feedback timing indicator) may be indicated by the group common DCI, as will be described later.

As an example, a list of UE-specific K1 values may be included in the DCI (Option 1B-1). Each K1 in the list may indicate the same UL slot or a different UL (sub)slot for other terminals in the group.

For example, different K1 values are assigned to different UEs. That is, a K1 value may be assigned to UE 1, a K2 value may be assigned to UE 2, and a K3 value may be assigned to UE 3.

As another example, the K1 value may be shared by multiple UEs. For example, UE 1 and UE 2 may share the K1 value, and UE 3 and UE 4 may share the K2 value.

As another example, one K1 value may be a reference, and another K1 value may be assigned based on that reference. {List of K1_ref, K1_offset} may be indicated in DCI.

For example, UE 1 may use K1_ref, UE 2 may use K1_ref + K1_offest1, and UE 3 may use K1_ref + K1_offest2.

As another example, a group common K1 value may be included in the DCI (Option 1B-2). For example, a single K1 value may be the same for all UEs in a group receiving DCI, or may indicate a corresponding entry for the candidate 'dl-DataToUL-ACK' value in the UE-specific 'PUCCH-config' for different PUCCH resource allocation. This can be applied when the DCI format is configured in the UE-specific 'PUCCH-config' for the K1 value.

As another example, the candidate 'dl-DataToUL-ACK' value is configured by RRC and may be configured differently for other UEs of the same group at least in 'PUCCH-config' for multicast.

As another example, if 'PUCCH-config' for multicast is configured for HARQ-ACK for grouping common PDSCH scheduled by group common DCI, the UE may assume that the K1 value of the group common DCI indicates the corresponding entry for the candidate 'dl-DataToUL-ACK' value in 'PUCCH-config' for multicast.

As another example, if 'PUCCH-config' for multicast is not configured for HARQ-ACK to group common PDSCH scheduled by group common DCI, the UE may assume that the K1 value of the group common DCI indicates an entry corresponding to the candidate 'dl-DataToUL-ACK' value in 'PUCCH-config' for unicast.

In addition, upon receiving the group common DCI CRC scrambled by the G-RNTI and/or the terminal-specific DCI CRC scrambled by the C-RNTI, if Type-1 HARQ-ACK codebook is configured for 'PUCCH-config' for multicast and/or 'PUCCH-config' for unicast, the UE may configure TDRA (Time Domain Resource Allocation) to generate a type-1 HARQ-ACK codebook for HARQ-ACK(s) to group common PDSCH scheduled by group common DCI and/or UE-specific PDSCH scheduled by UE-specific DCI.

If TB decoding is not successful in the PDSCH transmission occasion, the UE may transmit HARQ NACK to the base station through PUCCH resources in the configured UL CFR.

By using PUCCH resources, the UE may transmit HARQ-ACK to other PDSCH transmissions, such as unicast SPS PDSCH, dynamic unicast PDSCH, PTP retransmission, and/or dynamic group common PDSCH.

Here, to multiplex HARQ-ACK on PUCCH in (sub)slots for SPS PDSCH for multicast, SPS PDSCH for unicast, dynamically scheduled multicast PDSCH and/or dynamically scheduled unicast PDSCH, the UE may construct a codebook based on one or more of the above-described options.

If the RSRP threshold is configured, the UE may use NACK-only based HARQ-ACK based NACK based on the RSRP of the measured serving cell. If the measured RSRP is higher than the threshold, NACK-only-based HARQ-ACK may be transmitted through the group common PUCCH resource indicated by the DCI's PRI. If the measured RSRP is lower than the threshold, NACK-only-based HARQ-ACK can be changed to ACK/NACK-based HARQ-ACK on the UE-specific PUCCH resource indicated by the PRI of the DCI.

Meanwhile, when 'pdsch-AggregationFactor' is configured for G-RNTI or 'repeat_number' is indicated by DCI from the network side, TB scheduled by group common DCI, if configured, may be repeated for the Nth HARQ transmission of the TB within each symbol allocation between each 'pdsch-AggregationFactor' consecutive slot or between each 'repeat_number' consecutive slot.

For example, the operation of the UE (100 or 200 in FIG. 13) in step S125 described above to transmit the HARQ-ACK from the network side (200 or 100 in FIG. 13) may be implemented by the device in FIG. 13, which will be described below. For example, referring to FIG. 13, one or more processors 102 may control one or more transceivers 106 and/or one or more memories 104 to transmit the HARQ-ACK, and one or more transceivers 106 may transmit the HARQ-ACK from a network side.

The network side that has received the HARQ NACK in the TCI state may retransmit the PDCCH and PDSCH using the TCI state in the DL CFR configured for retransmission of the TB (S130).

The UE may monitor the group common and/or UE-specific PDCCH using the TCI state for the search space configured in the DL CFR to receive retransmission of the TB. The network side may retransmit the TB to one of the UEs in the group by UE-specific PDCCH. However, since the other UE successfully received the TB, it may not receive the TB retransmission.

When the UE receives the PDCCH for retransmission of the TB, the UE may receive the PDSCH scheduled by the DCI of the PDCCH. If the UE successfully decodes TB from PDSCH, the UE may consider the decoded TB to be associated with short ID for MTCH, MRB, TMGI, G-RNTI and/or MBS services based on the mapping between the MBS service indicated by the DCI and the HPN (HARQ process number), and/or the mapping between the MBS service indicated by the DCI and the short ID(s).

If TB decoding is successful at the PDSCH transmission occasion, the UE may transmit HARQ ACK to the network through PUCCH resources in the UL CFR configured according to the above-described procedure. Using the PUCCH resource, the UE may transmit HARQ-ACK to other PDSCH transmissions, such as unicast SPS PDSCH, dynamic unicast PDSCH, PTP retransmission, and/or dynamic group common PDSCH.

In this case, to multiplex HARQ-ACK on PUCCH in (sub)slots for SPS PDSCH for multicast, SPS PDSCH for unicast, dynamically scheduled multicast PDSCH and/or dynamically scheduled unicast PDSCH, the UE may construct a codebook based on one or more of the options/embodiments described above.

For example, the operation of the UE (100 or 200 in FIG. 13) in step S130 described above receiving a TB retransmission from the network side (200 or 100 in FIG. 13) may be implemented by the device in FIG. 13, which will be described below. For example, referring to FIG. 13, one or more processors 102 may control one or more transceivers 106 and/or one or more memories 104, etc. to receive the TB retransmission, and one or more transceivers 106 may receive the TB retransmission from a network side.

General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/- signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.    A method for a user equipment (UE) to perform uplink transmission in a wireless communication system, the method comprising:

receiving, from a base station, configuration information related to a semi-static hybrid automatic repeat request (HARQ)-acknowledgement (ACK) codebook for a physical downlink shared channel (PDSCH);

receiving, from the base station, at least one downlink control information (DCI) including a downlink assignment index (DAI) field; and

based on a first PDSCH satisfying a specific condition among a plurality of PDSCHs being received from the base station, transmitting HARQ-ACK information for the first PDSCH to the base station,

wherein based on the DAI field included in the at least one DCI associated with the plurality of PDSCHs indicating a specific value, the semi-static HARQ-ACK codebook constructed based on HARQ-ACK information for each of the plurality of PDSCHs is transmitted to the base station.

2. The method of claim 1, wherein:
based on the first PDSCH among the plurality of PDSCHs and a second PDSCH that does not satisfy the specific condition being received from the base station, the semi-static codebook for the plurality of PDSCHs is transmitted to the base station.

3. The method of claim 2, wherein:
the first PDSCH that satisfies the specific conditions includes a SPS(semi-persistence signaling) group-common SPS PDSCH scrambled by a G(group)-RNTI(radio network temporary identifier) or G-CS(configured scheduling)-RNTI, or a group common PDSCH scheduled by the at least one DCI CRC scrambled by G-RNTI or G-CS-RNTI.

4. The method of claim 1, wherein:

The at least one DCI includes a first DCI and a second DCI, and
based on the DAI field included in the first DCI indicating the specific value and the second DCI field not indicating the specific value, the semi-static codebook for the plurality of PDSCHs is transmitted to the base station.

5. The method of claim 1, wherein:

the plurality of PDSCHs include the first PDSCH and a second PDSCH,
the first PDSCH is a multicast PDSCH scheduled by a multicast DCI among the at least one DCI, and
the second PDSCH is a unicast PDSCH scheduled by a unicast DCI among the at least one DCI.

6. The method of claim 5, wherein:
based on the second PDSCH satisfying the specific condition, HARQ-ACK information for the second PDSCH is transmitted to the base station.

7. The method of claim 6, wherein:
HARQ-ACK information for the first PDSCH and HARQ-ACK information for the second PDSCH are concatenated and transmitted to the base station.

8. The method of claim 1, wherein:
the first PDSCH is a unicast PDSCH and the DAI field of the DCI scheduling the first PDSCH among the at least one DCI indicates the specific value.

9. The method of claim 2, wherein:
based on a single multicast DCI CRC scrambled by a G-RNTI or G-CS-RNTI among the at least one DCI being received from the base station, HARQ-ACK information for the single multicast DCI is transmitted to the base station.

10. The method of claim 9, wherein:
the single multicast DCI includes a DAI value for activating or releasing a group-common SPS PDSCH among the plurality of PDSCHs.

11. A user equipment (UE) for performing uplink transmission in a wireless communication system, the UE comprising:

at least one transceiver; and
at least one processor connected to the at least one transceiver,
wherein the at least one processor is configured to:

receive, from a base station through the at least one transceiver, configuration information related to a semi-static hybrid automatic repeat request (HARQ)-acknowledgement (ACK) codebook for a physical downlink shared channel (PDSCH);

receive, from the base station through the at least one transceiver, at least one downlink control information (DCI) including a downlink assignment index (DAI) field; and

based on a first PDSCH satisfying a specific condition among a plurality of PDSCHs being received from the base station, transmit HARQ-ACK information for the first PDSCH to the base station through the at least one transceiver,

wherein based on the DAI field included in the at least one DCI associated with the plurality of PDSCHs indicating a specific value, the semi-static HARQ-ACK codebook constructed based on HARQ-ACK information for each of the plurality of PDSCHs is transmitted to the base station.

12. A method of performing uplink reception by a base station in a wireless communication system, the method comprising:

transmitting, to a user equipment (UE), configuration information related to a semi-static hybrid automatic repeat request (HARQ)- acknowledgement (ACK) codebook for a physical downlink shared channel (PDSCH);

transmitting, to the UE, at least one downlink control information (DCI) including a downlink assignment index (DAI) field; and

based on a first PDSCH satisfying a specific condition among a plurality of PDSCHs being received from the base station, receiving HARQ-ACK information for the first PDSCH from the UE,

wherein based on the DAI field included in the at least one DCI associated with the plurality of PDSCHs indicating a specific value, the semi-static HARQ-ACK codebook constructed based on HARQ-ACK information for each of the plurality of PDSCHs is received from the UE.

13. A base station for performing uplink reception in a wireless communication system, the base station comprising:

at least one transceiver; and

at least one processor connected to the at least one transceiver,

wherein the at least one processor is configured to:

transmit, to a user equipment (UE) through the at least one transceiver, configuration information related to a semi-static hybrid automatic repeat request (HARQ)-acknowledgement (ACK) codebook for a physical downlink shared channel (PDSCH);

transmit, to the UE through the at least one transceiver, at least one downlink control information (DCI) including a downlink assignment index (DAI) field; and

based on a first PDSCH satisfying a specific condition among a plurality of PDSCHs being received from the base station, receive HARQ-ACK information for the first PDSCH from the UE through the at least one transceiver,

wherein based on the DAI field included in the at least one DCI associated with the plurality of PDSCHs indicating a specific value, the semi-static HARQ-ACK codebook constructed based on HARQ-ACK information for each of the plurality of PDSCHs is received from the UE.

14. A processing apparatus configured to control a user equipment (UE) to perform uplink transmission in a wireless communication system, the processing apparatus comprising:

at least one processor; and

at least one computer memory operably connected to the at least one processor and storing instructions that, based on being executed by the at least one processor, perform operations comprising:

receiving, from a base station, configuration information related to a semi-static hybrid automatic repeat request (HARQ)-acknowledgement (ACK) codebook for a physical downlink shared channel (PDSCH);

receiving, from the base station, at least one downlink control information (DCI) including a downlink assignment index (DAI) field; and

based on a first PDSCH satisfying a specific condition among a plurality of PDSCHs being received from the base station, transmitting HARQ-ACK information for the first PDSCH to the base station,

wherein based on the DAI field included in the at least one DCI associated with the plurality of PDSCHs indicating a specific value, the semi-static HARQ-ACK codebook constructed based on HARQ-ACK information for each of the plurality of PDSCHs is transmitted to the base station.

**15.** At least one non-transitory computer-readable medium storing at least one instruction, wherein the at least one instruction executable by at least one processor controls a device performing uplink transmission in a wireless communication system to:

receive, from a base station, configuration information related to a semi-static hybrid automatic repeat request (HARQ)-acknowledgement (ACK) codebook for a physical downlink shared channel (PDSCH);
receive, from the base station, at least one downlink control information (DCI) including a downlink assignment index (DAI) field; and
based on a first PDSCH satisfying a specific condition among a plurality of PDSCHs being received from the base station, transmit HARQ-ACK information for the first PDSCH to the base station,
wherein based on the DAI field included in the at least one DCI associated with the plurality of PDSCHs indicating a specific value, the semi-static HARQ-ACK codebook constructed based on HARQ-ACK information for each of the plurality of PDSCHs is transmitted to the base station.

# FIG.1

# FIG.2

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$    $l = 14 \cdot 2^{\mu} - 1$

# FIG.4

# FIG.5

## FIG.6

| INITIAL CELL SEARCH | SYSTEM INFORMATION RECEPTION | RANDOM ACCESS PROCEDURE | | | | GENERAL DL/UL Tx/Rx | |
|---|---|---|---|---|---|---|---|
| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |
| S601 | S602 | S603 | S604 | S605 | S606 | S607 | S608 |

· DL/UL ACK/NACK
· UE CQI/PMI RI REPORT
  USING PUSCH AND PUCCH

# FIG.7

C-RNTI DCI indicating HP or LP

| Unicast PDSCH | | Unicast HARQ-ACK |

G-RNTI#1 DCI indicating HP or LP

| multicast PDSCH | | Multicast HARQ-ACK1 |

G-RNTI#2 DCI indicating HP or LP

| multicast PDSCH | | Multicast HARQ-ACK2 |

## FIG.8

PUCCH

| E | F | G | H |
| A | B | C | D |

////// Multicast (E/F/G/H)
\\\\\\ Unicast (A/B/C/D)

DL slot #1    DL slot #2

## FIG.9

PUCCH

| E | F | G | H |
| A | B | C | D |

G-RNTI2 (G/H)
G-RNTI1 (E/F)
Unicast (A/B/C/D)

DL slot #1    DL slot #2

## FIG.10

TRANSMITTING CONFIGURATION INFORMATION RELATED TO THE SEMI-STATIC HARQ-ACK CODEBOOK FOR THE PDSCH TO THE BASE STATION — S1010

RECEIVING AT LEAST ONE DCI INCLUDING A DAI FIELD FROM THE BASE STATION — S1020

BASED ON A FIRST PDSCH THAT SATISFIES A SPECIFIC CONDITION AMONG A PLURALITY OF PDSCHS BEING RECEIVED FROM THE BASE STATION, TRANSMITTING HARQ-ACK INFORMATION FOR THE FIRST PDSCH TO THE BASE STATION — S1030

## FIG.11

TRANSMITTING CONFIGURATION INFORMATION RELATED TO THE SEMI-STATIC HARQ-ACK CODEBOOK FOR THE PDSCH TO THE UE — S1110

TRANSMITTING AT LEAST ONE DCI INCLUDING A DAI FIELD TO THE UE — S1120

BASED ON THE FIRST PDSCH THAT SATISFIES SPECIFIC CONDITIONS AMONG A PLURALITY OF PDSCHS BEING TRANSMITTED TO THE UE, RECEIVING HARQ-ACK INFORMATION FOR THE FIRST PDSCH FROM THE UE — S1130

# FIG.12

Network side                                                                UE

MBS SERVICE RELATED MESSAGE (S105)

CONFIGURATION INFORMATION (S110)

CONTROL INFORMATION (S115)

TB (S120)

HARQ-ACK (S125)

TB RETRANSMISSION (S130)

FIG.13

EP 4 478 637 A1

## INTERNATIONAL SEARCH REPORT

| | International application No. |
|---|---|
| | **PCT/KR2023/001969** |

| A. | CLASSIFICATION OF SUBJECT MATTER |
|---|---|
| | **H04L 1/18**(2006.01)i; **H04L 5/00**(2006.01)i; **H04W 4/06**(2009.01)i |

According to International Patent Classification (IPC) or to both national classification and IPC

| B. | FIELDS SEARCHED |
|---|---|

Minimum documentation searched (classification system followed by classification symbols)

H04L 1/18(2006.01); H04L 1/16(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: semi-static HARQ-ACK codebook, multicast, unicast, type 1, type 2, fallback, DCI, DAI, G-RNTI, G-CS-RNTI, SPS group-common, PDSCH

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2017-0053470 A (INNOVATIVE TECHNOLOGY LAB CO., LTD.) 16 May 2017 (2017-05-16)<br>See paragraphs [0027]-[0127]; and figures 5-8. | 1,11-15 |
| A | | 2-10 |
| Y | KR 10-1600408 B1 (CHINA ACADEMY OF TELECOMMUNICATIONS TECHNOLOGY) 21 March 2016 (2016-03-21)<br>See paragraphs [0071]-[0137]; claims 1 and 4; and figures 3-4. | 1,11-15 |
| A | KR 10-2018-0031014 A (LENOVO INNOVATIONS LIMITED (HONG KONG)) 27 March 2018 (2018-03-27)<br>See paragraphs [0218]-[0238]; and figures 9a-9b. | 1-15 |
| A | US 2021-0359796 A1 (BEIJING UNISOC COMMUNICATIONS TECHNOLOGY CO., LTD.) 18 November 2021 (2021-11-18)<br>See paragraphs [0033]-[0049]; and figure 1. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 May 2023** | **25 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/001969**

**C. DOCUMENTS CONSIDERED TO BE RELEVANT**

| Category* | Citation of document, with indication, where appropriate, of the relevant passages | Relevant to claim No. |
|---|---|---|
| A | CMCC. Agreements for NR MBS up to RAN1#107bis. R1-2200810, 3GPP TSG RAN WG1 #107bis-e, e-Meeting. 28 January 2022. See section 8. | 1-15 |

## INTERNATIONAL SEARCH REPORT
### Information on patent family members

International application No.

**PCT/KR2023/001969**

| Patent document cited in search report | | | Publication date (day/month/year) | Patent family member(s) | | | Publication date (day/month/year) |
|---|---|---|---|---|---|---|---|
| KR | 10-2017-0053470 | A | 16 May 2017 | KR | 10-2511925 | B1 | 20 March 2023 |
| | | | | US | 10404438 | B2 | 03 September 2019 |
| | | | | US | 11050542 | B2 | 29 June 2021 |
| | | | | US | 2017-0134140 | A1 | 11 May 2017 |
| | | | | US | 2019-0356456 | A1 | 21 November 2019 |
| | | | | US | 2021-0281379 | A1 | 09 September 2021 |
| | | | | WO | 2017-078454 | A1 | 11 May 2017 |
| KR | 10-1600408 | B1 | 21 March 2016 | CN | 102170338 | A | 31 August 2011 |
| | | | | CN | 102170338 | B | 25 September 2013 |
| | | | | EP | 2704345 | A1 | 05 March 2014 |
| | | | | EP | 2704345 | A4 | 21 May 2014 |
| | | | | EP | 2704345 | B1 | 26 April 2017 |
| | | | | JP | 2014-515238 | A | 26 June 2014 |
| | | | | JP | 5823025 | B2 | 25 November 2015 |
| | | | | KR | 10-2014-0004242 | A | 10 January 2014 |
| | | | | US | 2014-0050176 | A1 | 20 February 2014 |
| | | | | US | 9241342 | B2 | 19 January 2016 |
| | | | | WO | 2012-146107 | A1 | 01 November 2012 |
| KR | 10-2018-0031014 | A | 27 March 2018 | CN | 108292974 | A | 17 July 2018 |
| | | | | CN | 108292974 | B | 10 September 2021 |
| | | | | EP | 3320637 | A1 | 16 May 2018 |
| | | | | EP | 3320637 | A4 | 13 March 2019 |
| | | | | KR | 10-2288231 | B1 | 09 August 2021 |
| | | | | US | 10341057 | B2 | 02 July 2019 |
| | | | | US | 2018-0241510 | A1 | 23 August 2018 |
| | | | | WO | 2017-028001 | A1 | 23 February 2017 |
| US | 2021-0359796 | A1 | 18 November 2021 | CN | 110830174 | A | 21 February 2020 |
| | | | | CN | 110830174 | B | 27 November 2020 |
| | | | | EP | 3836682 | A1 | 16 June 2021 |
| | | | | EP | 3836682 | A4 | 04 May 2022 |
| | | | | WO | 2020-029696 | A1 | 13 February 2020 |

Form PCT/ISA/210 (patent family annex) (July 2022)